# EUROPEAN PATENT APPLICATION

(11) **EP 3 016 442 A2**
(43) Date of publication of application: **04.05.2016**
(21) Application number: 15191946.1
(22) Date of filing: 28.10.2015
(51) Int. Cl.: H04W 48/16, H04W 8/00, H04W 76/02

(54) **METHOD FOR SCANNING NEIGHBORING DEVICES AND ELECTRONIC DEVICE THEREOF**

(30) Priority: 28.10.2014 KR 20140147375
(71) Applicant: Samsung Electronics Co., Ltd., Gyeonggi-do 16677 (KR)
(72) Inventor: RYU, Eun-Seok, Seoul (KR); YOON, Su-Ha, Seoul (KR); JUNG, Eui-Chang, Seoul (KR); PARK, Su-Young, Gyeonggi-do (KR); CHEONG, Cheol-Ho, Seoul (KR); CHUN, Jae-Woong, Gyeonggi-do (KR); YOON, Sung-Rok, Seoul (KR); KIM, Kwang-Tai, Gyeonggi-do (KR); JEONG, Jin-Hong, Gyeonggi-do (KR)
(74) Representative: Gover, Richard Paul

(57) **Abstract**

A method and electronic device implementing the same is disclosed. The electronic device includes an antenna, a communication module, and at least one processor. The processor may implemented the method, including determining, by at least one processor, directional information, transmitting, by a communication module, a scan request message comprising the directional information through wireless communication, and receiving a scan response message responding to the scan request message through the wireless communication.

## Description

### BACKGROUND

### 1. Field of the Disclosure

Various example embodiments of the present disclosure relate to a method for scanning neighboring devices and an electronic device thereof

### 2. Description of the Related Art

Various kinds of electronic devices are widely used. For example, various wearable electronic devices such as a smart watches, smart glasses, and the like are widely used in addition to smart phones, tablet PCs, laptop computers, and the like.

In the technical field of smart home, various electronic devices in the form of a home appliance such as a TV, an air conditioner, a refrigerator, a washing machine, and the like are provided with a wireless communication function, and can wirelessly communicate with the same kind of electronic devices or different kinds of electronic devices.

In the technical field of wireless communication, wireless communication in various methods is being studied and developed to adapt to communication environments between the electronic devices. For example, wireless communication such as Internet of Things (IoT), Machine to Machine (M2M), Device to Device (D2D), 5G communication, Neighborhood Area Network (NAN), and the like is being studied and developed.

The wireless communication between the electronic devices may use a network operator-centered cell network (for example, a carrier service), or may use Wireless Fidelity (WiFi), Bluetooth (BT), etc.

For example, the WiFi wireless communication adopts the 802.11ac standard using a frequency of a 5 GHz band, and the 802.11ad standard using a frequency of a 60 GHz band, and there is wireless communication of a beamforming method which selectively directs a specific direction as desired using a millimeter wave (hereinafter, "mm-wave") frequency such as 60 GHz or 28 Hz.

The mm-wave does not pass through a wall or an obstacle due to its own frequency characteristic, and utilizes much power consumption and generates much heat, and also has a disadvantage of being vulnerable to tracking of a moving terminal. However, the mm-wave is less subject to electromagnetic interference (EMI) and has high directivity of propagation, and thus enables directional communication with a terminal located in a specific direction. In addition, the mm-wave does not pass through a wall or an obstacle and thus guarantees high security.

### SUMMARY

An aspect of the present disclosure provides a method for scanning neighboring devices in an electronic device, which can efficiently scan neighboring devices by directing the electronic device to the neighboring devices located in a desired direction or in desired direction and distance, when scanning or sweeping the neighboring devices through wireless communication such as Bluetooth (BT), WiFi, Bluetooth Low Energy (BLE), Long Term Evolution (LTE), etc., and an electronic device thereof.

In one aspect of this disclosure, an operation method of an electronic device, is disclosed, including determining, by at least one processor, directional information associated with a certain orientation of transmission or reception, transmitting, by a communication module, a scan request message comprising the directional information through wireless communication, and receiving a scan response message responding to the scan request message through the wireless communication.

In one aspect of this disclosure, an electronic device is disclosed, including an antenna, a communication module, and at least one processor, configured to: determine directional information associated with a certain orientation of transmission or reception, control the antenna and the communication module to transmit a scan request message comprising the directional information through wireless communication, and control the antenna and the communication module to receive a scan response message responding to the scan request message through the wireless communication.

### BRIEF DESCRIPTION OF THE DRAWINGS

For a more complete understanding of the present disclosure, reference is now made to the following description taken in conjunction with the accompanying drawings, in which like reference numerals represent like parts:
FIG. 1 illustrates a network environment of an electronic device according to embodiments of the present disclosure;
FIG. 2 is a block diagram illustrating an electronic device according to embodiments of the present disclosure;
FIG. 3 illustrates a view showing some elements of an electronic device 300 according to various example embodiments of the present disclosure;
FIG. 4 illustrates a view showing an example of a configuration of BLE channels according to various example embodiments of the present disclosure;
FIG. 5 illustrates a view showing an example of a BLE frame structure according to various example embodiments of the present disclosure;
FIG. 6 illustrates a view showing an example of a payload composition of a protocol data unit according to various example embodiments of the present disclosure;
FIG. 7 illustrates a view showing an example of a beacon broadcast message parameter 700 according to various example embodiments of the present disclosure;
FIG. 8 illustrates a view showing an example of modeling of an oriented direction 800 according to various example embodiments of the present disclosure;
FIG. 9 illustrates a view showing some elements of an electronic device 900 according to various example embodiments of the present disclosure;
FIG. 10 illustrates a view showing an example of an electronic device 1001 which directionally scans neighboring devices using a directional antenna according to various example embodiments of the present disclosure;
FIG. 11 illustrates a view showing an electronic device 1100 which scans neighboring devices in the unit of a sector using a directional antenna according to various example embodiments of the present disclosure;
FIG. 12 illustrates a view showing an electronic device 1200 which scans neighboring devices within a predetermined angle in a beamforming method using a directional antenna according to various example embodiments of the present disclosure;
FIG. 13 illustrates a view showing an example of parameters 1300 of a scan request message and a scan response message according to various example embodiments of the present disclosure;
FIG. 14 illustrates a flowchart showing an operation between an electronic device 1400 and a neighboring device 1401 according to various example embodiments of the present disclosure;
FIG. 15 illustrates a view showing an example of exchange of directional information and a displacement angle between an electronic device 1500 and a neighboring device 1501 according to various example embodiments of the present disclosure;
FIG. 16 illustrates a view showing an example of an IEEE 802.11ad MAC frame 1600 including a scan request message and a scan response message according to various example embodiments of the present disclosure;
FIG. 17 illustrates a view showing an example of a sector level sweep operation according to various example embodiments of the present disclosure;
FIG. 18 illustrates a view showing an example of a process of scanning a counterpart device in a super frame structure according to various example embodiments of the present disclosure;
FIG. 19 illustrates a view showing an example of a smart picture tagging operation according to various example embodiments of the present disclosure;
FIG. 20 illustrates a view showing an example of an operation of refusing to be photographed according to various example embodiments of the present disclosure;
FIG. 21 illustrates a view showing an example of a position recognition-based service according to various example embodiments of the present disclosure;
FIG. 22 illustrates a view showing an example of a video conference operation according to various example embodiments of the present disclosure;
FIG. 23 illustrates a view showing an example of a non-uniform depth scan operation based on a Region Of Interest (ROI) according to various example embodiments of the present disclosure; and
FIG. 24 illustrates a flowchart showing a method for scanning neighboring devices of an electronic device according to various example embodiments of the present disclosure.

### DETAILED DESCRIPTION

Hereinafter, various embodiments of the present disclosure will be described with reference to the accompanying drawings. The present disclosure may have various embodiments, and modifications and changes may be made therein. Therefore, the present disclosure will be described in detail with reference to particular embodiments shown in the accompanying drawings. However, it should be understood that there is no intent to limit the present disclosure to the particular forms disclosed herein; rather, the present disclosure should be construed to cover all modifications, equivalents, and/or alternatives falling within the disclosure. In the description of the drawings, similar reference numerals may be used to designate similar elements.

As used in various embodiments of the present disclosure, the expressions "include", "may include" and other conjugates refer to the existence of a corresponding disclosed function, operation, or constituent element, and do not limit one or more additional functions, operations, or constituent elements. Further, as used in various embodiments of the present disclosure, the terms "include", "have", and their conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

Further, as used in various embodiments of the present disclosure, the expression "or" includes any or all combinations of words enumerated together. For example, the expression "A or B" or "at least A or/and B" may include A, may include B, or may include both A and B. In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. For example, without departing from the present disclosure, a first component element may be named a second component element. Similarly, the second component element also may be named the first component element.

When an element is referred to as being "coupled" or "connected" to any other element, it should be understood that not only the element may be coupled or connected directly to the other element, but also a third element may be interposed therebetween. Contrarily, when an element is referred to as being "directly coupled" or "directly connected" to any other element, it should be understood that no element is interposed therebetween.

The terms as used in various embodiments of the present disclosure are used merely to describe a certain embodiment and are not intended to limit the present disclosure. As used herein, singular forms may include plural forms as well unless the context explicitly indicates otherwise. Further, all terms used herein, including technical and scientific terms, have the same meaning as commonly understood by those of skill in the art to which the present disclosure pertains. Such terms as those defined in a generally used dictionary are to be interpreted to have the meanings equal to the contextual meanings in the relevant field of art, and are not to be interpreted to have ideal or excessively formal meanings unless clearly defined in various embodiments of the present disclosure.

An electronic device according to various embodiments of the present disclosure may be a device including a communication interface 160. The electronic device according to various embodiments of the present disclosure may, for example, include at least one of a smart phone, a tablet personal computer (PC), a mobile phone, a video phone, an e-book reader, a desktop PC, a laptop PC, a netbook computer, a personal digital assistant (PDA), a portable multimedia player (PMP), an MP3 player, a mobile medical device, a camera, a wearable device (e.g., a head-mount-device (HMD) such as electronic glasses, electronic clothing, an electronic bracelet, an electronic necklace, an electronic appcessory, an electronic tattoo, or a smart watch), a television, a digital video disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an artificial intelligence robot, a Television (TV), an electronic dictionary, an electronic key, a camcorder, medical equipment (e.g., a magnetic resonance angiography (MRA) machine, a magnetic resonance imaging (MRI) machine, a computed tomography (CT) scanner, or an ultrasonic machine), a navigation device, a global positioning system (GPS) receiver, an event data recorder (EDR), a flight data recorder (FDR), a vehicle infotainment device, electronic equipment for a ship (e.g., ship navigation equipment and a gyrocompass), avionics, security equipment, an industrial or home robot, a part of furniture or building/structure, an electronic board, an electronic signature receiving device, a projector, and various measuring instruments (e.g., a water meter, an electricity meter, a gas meter, or a wave meter), each of which may include an electronic device according to embodiments of the present disclosure may be a device including a communication function.

The electronic device according to various embodiments of the present disclosure may be a combination of one or more of the aforementioned various devices. Further, the electronic device according to various embodiments of the present disclosure may be a flexible device. Further, it will be apparent to those skilled in the art that the electronic device according to various embodiments of the present disclosure is not limited to the above-mentioned devices.

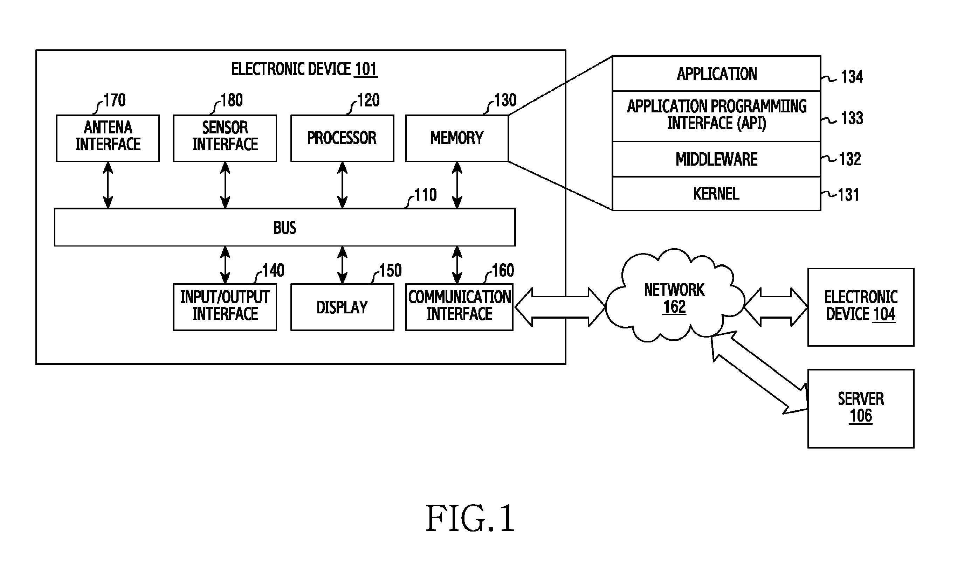

FIG. 1 illustrates a network environment including an electronic device according to various embodiments of the present disclosure. Referring to FIG. 1, the electronic device 101 may include at least one of a bus 110, a processor 120, a memory 130, an input/output interface 140, a display 150, a communication interface 160, an antenna interface 170, and a sensor interface 180.

The antenna interface 170 may include one or more an onmi-directional antenna for transmitting and receiving signals in all directions, and a directional antenna for transmitting and receiving signals In a specific direction. The onmi-directional antenna or the directional antenna may be integrated into single element with a case of the electronic device or may interwork with the case of the electronic device as a separate element. The antenna interface 170 may be included in the communication interface 160, or may interwork with the processor 120 as a separate element.

The sensor interface 180 is a component for receiving information from a various sensors such as a motion sensor, a position sensor, a fingerprint sensor, an acceleration sensor, a geomagnetic sensor, a heart rate meter and so on. The bus 110 may be a circuit that connects the aforementioned elements to each other and transmits communication signals (for example, control messages) between the aforementioned elements.

The processor 120 may, for example, receive commands from the above-mentioned other elements (for example, the memory 130, the input/output interface 140, the display 150, and the communication interface 160) via the bus 110, interpret the received commands, and/or perform calculations or data processing according to the interpreted commands. One or more processors 120 may be included in the electronic device 101 to perform a predetermined function of the electronic device 101.

The memory 130 may store commands or data received from or generated by the processor 120 or other components (for example, the input/output interface 140, the display 150, and the communication interface 160). The memory 130 may include programming modules, for example, a kernel 131, middleware 132, an Application Programming Interface (API) 133, applications 134, or the like. Each of the programming modules may be formed of software, firmware, or hardware, or a combination of two or more thereof.

The kernel 131 may control or manage the remaining programming modules, for example, system resources (for example, the bus 110, the processor 120, or the memory 130) used for executing operations or functions implemented in the middleware 132, the API 133, or the applications 134. Also, the kernel 131 may provide an interface by which the middleware 132, the API 133, or the applications 134 may access individual components of the electronic device 101 to control or manage them.

The middleware 132 may perform a relay function, which may allow the API 133 or the applications 134 to communicate with and exchange data with the kernel 131. Furthermore, with regard to task requests received from the applications 134, the middleware 132 may perform a control (for example, scheduling or load balancing) for the task requests using, for example, a method of assigning a priority, by which the system resources (for example, the bus 110, the processor 120, or the memory 130) of the electronic device 101 may be preferentially used, to at least one of the applications 134.

The API 133 is an interface used by the applications 134 to control a function provided from the kernel 131 or the middleware 132. The API 133 may include, for example, at least one interface or function, for example, an instruction, for a file control, a window control, image processing, a character control, or the like.

The applications 134 may include a short message service (SMS)/multimedia message service (MMS) application, an e-mail application, a calendar application, an alarm application, a health care application (for example, application for monitoring physical activity or blood glucose), and an environmental information application (for example, application for providing atmospheric pressure, humidity, or temperature information). The application 134 may correspond to an application associated with information exchange between the electronic device 101 and an external electronic device (for example, the electronic device 102 or the electronic device 104).

The application related to the information exchange may include, for example, a notification transmission application for transferring predetermined information to an external electronic device or a device management application for managing an external electronic device. The notification relay application may, for example, include a function of transferring, to an external electronic device (for example, the electronic device 104), notification information generated by other applications (for example, an SMS/MMS application, an e-mail application, a health management application, or an environmental information application) of the electronic device 101.

Additionally or alternatively, the notification relay application may receive notification information from, for example, the external electronic device (for example, the electronic device 104) and provide the received notification information to a user. For example, the device management application may manage (for example, install, delete, or update) functions for at least a part of the external electronic device (for example, the electronic device 104) communicating with the electronic device 101 (for example, turning on/off the external electronic device itself (or some elements thereof) or adjusting the brightness (or resolution) of a display), applications operating in the external electronic device, or services (for example, a telephone call service or a message service) provided from the external electronic device.

According to various embodiments, the applications 134 may include an application designated according to attributes (for example, the type of electronic device) of the external electronic device (for example, the electronic device 104). For example, when the external electronic device is an MP3 player, the applications 134 may include an application related to the reproduction of music. Similarly, when the external electronic device is a mobile medical appliance, the applications 134 may include an application related to health care.

The input/output interface 140 may transfer a command or data input by a user through an input/output device (for example, various sensors such as an acceleration sensor and a gyro sensor and/or a device such as a keyboard or a touch screen) to the processor 120, the memory 130, the communication interface 160 through, for example, the bus 110. For example, the input/output interface 140 may provide the processor 120 with data corresponding to a touch of the user received as input through a touch screen.

Further, the input/output interface 140 may output a command or data, received from, for example, the processor 120, the memory 130, and/or the communication interface 160 via the bus 110, through an output unit (for example, speaker or display). For example, the input/output interface 140 may output voice data processed by the processor 120 to the user through a speaker. The display 150 may display various pieces of information (for example, multimedia data, text data or the like.) to a user. Further, the display 150 may include a touch screen for receiving a command through a touch or a proximity touch on the display by an input means.

The communication interface 160 (for example, a communication module 220) may establish a communication connection between the electronic device 101 and an external device (for example, the electronic device 104 or the server 106). For example, the communication interface 160 may be connected to the network 162 through wireless communication or wired communication, and may communicate with an external device.

The wireless communication may include at least one of, for example, Wi-Fi, Bluetooth (BT), Near Field Communication (NFC), Global Positioning System (GPS) and cellular communication (for example LTE, LTE-A, CDMA, WCDMA, UMTS, WiBro, GSM, etc.). The wired communication may include at least one of, for example, a Universal Serial Bus (USB), a High Definition Multimedia Interface (HDMI), a Recommended Standard 232 (RS-232), and a Plain Old Telephone Service (POTS).

According to an embodiment, the network 162 may be a communication network. The communication network may include at least one of a computer network, the Internet, the Internet of things, and a telephone network. According to an embodiment, a protocol (for example, a transport layer protocol, data link layer protocol, or a physical layer protocol) for communication between the electronic device 101 and the external device may be supported by at least one of the application 134, the application programming interface 133, the middleware 132, the kernel 131, and the communication interface 160.

According to an embodiment, the server 106 may support the driving of the electronic device 101 by performing at least one operation (or function) implemented in the electronic device 101. For example, the server 106 may include the processor 120 for controlling the electronic device 101 to perform various embodiments of the present disclosure or a server module (for example, a server controller or a server processor (not shown)), which can support a specific module configured to perform various embodiments.

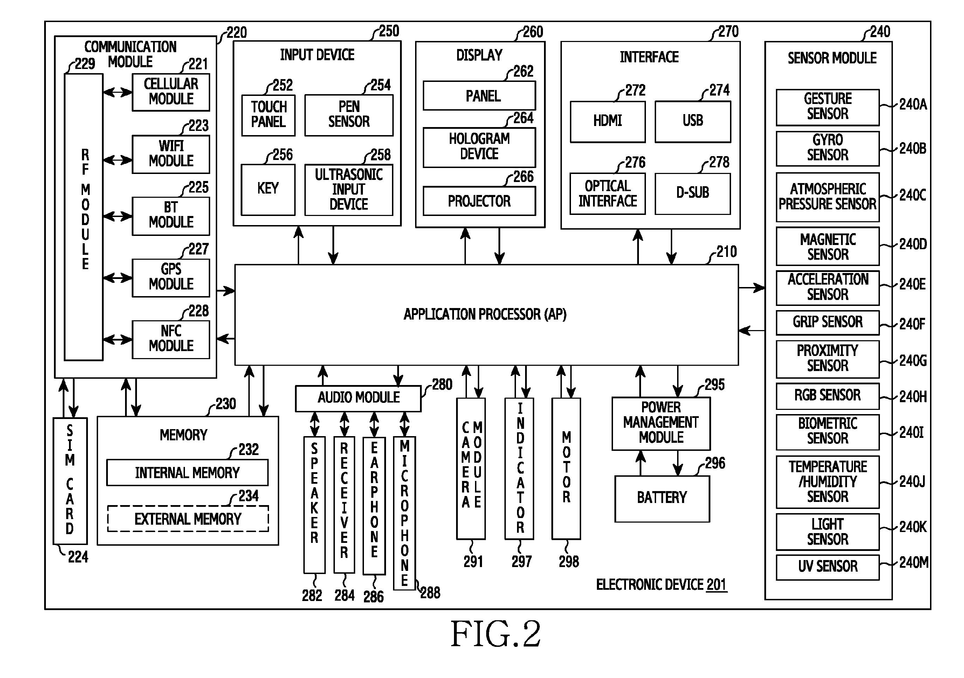

FIG. 2 is a block diagram of an electronic device according to various embodiments of the present disclosure. The electronic device 201 may include, for example, all or some of the electronic device 101 illustrated in FIG. 1, or expand all or some of the components of the electronic device 101. Referring to FIG. 2, the electronic device 201 may include at least one Application Processor (AP) 210, a communication module 220, a Subscriber Identifier Module (SIM) card 224, a memory 230, a sensor module 240, an input device 250, a display 260, an interface 270, an audio module 280, a camera module 291, a power management module 295, a battery 296, an indicator 297, and/or a motor 298.

One or more processors 210 may be included in the electronic device 101 to perform a predetermined function of the electronic device 101. According to an embodiment, the processor 210 may include one or more Application Processors (APs) and one or more Micro Control Unit (MCUs). According to another embodiment, the processor 210 may include one or more micro controllers as applications or may be functionally connected to one or more micro controllers.

In FIG. 1, the AP and the MCU may be included in one IC package, or may be separately configured to be included in different IC packages, respectively. According to an embodiment, the MCU may be included in an IC package of the AP to be configured as one IC package. Although the processor 210 includes the AP or the MCU in FIG. 2, it is an embodiment for clear understanding, but it is obvious that the processor 210 may also perform operations of the AP and/or the MCU.

The AP may drive an operating system or an application program so as to control a plurality of hardware or software components connected to the AP, and may process various pieces of data including multimedia data and perform calculations. The AP may be implemented by, for example, a System on Chip (SoC). According to an embodiment, the processor 210 may further include a Graphic Processing Unit (GPU) (not illustrated).

The MCU may be a processor configured to perform a predetermined operation. According to an embodiment, the MCU may acquire sensing information through one or more predetermined motion sensors (for example, a gyro sensor 240B, an acceleration sensor 240E, or a geomagnetic sensor 140P), compare acquired sensing information, and determine an operation state of the predetermined sensor (for example, the geomagnetic sensor 140P) with reference to a database of the electronic device 101.

Further, although the MCU and the components of the sensor module 240 are illustrated as separate components in FIG. 2, the MCU may be implemented to include at least some of the components of the sensor module 240 (for example, at least one of the gyro sensor 240B, the acceleration sensor 240E, and the geomagnetic sensor 140P). According to an embodiment, the AP or the MCU may load a command or data received from at least one of a non-volatile memory and other components connected to each of the AP and the MCU in a volatile memory, and may process the loaded command or data. Further, the AP or the CP may store data received from or generated by at least one of the other components in a non-volatile memory.

The communication module 220 (for example, the communication interface 160) may perform data transmission/reception in communication between the electronic device 101 and other electronic devices (for example, the electronic device 102, the electronic device 104, or the server 106) connected thereto through a network. According to an embodiment, the communication module 220 may include a cellular module 221, a Wi-Fi module 223, a BT module 225, a GPS module 227, an NFC module 228, and/or a Radio Frequency (RF) module 229.

The cellular module 221 may provide a voice, a call, a video call, a text message service, or an Internet service through a communication network (for example, Long Term Evolution (LTE), LTE-A, Code Division Multiple Access (CDMA), Wideband CDMA (WCDMA), Universal Mobile Telecommunication System (UMTS), Wireless Broadband (WiBro), or Global System for Mobile communication (GSM)). Furthermore, the cellular module 221 may distinguish between and authenticate electronic devices within a communication network by using, for example, a subscriber identification module (for example, the SIM card 224). According to an embodiment, the cellular module 221 may perform at least some of the functions that the AP 210 may provide. For example, the cellular module 221 may perform at least some of the multimedia control functions.

According to an embodiment of the present disclosure, the cellular module 221 may include a communication processor (CP). Furthermore, the cellular module 221 may be implemented by, for example, an SoC. Although the components such as the cellular module 221 (for example, the communication processor), the memory 230, and the power management module 295 are illustrated as components separated from the AP 210 in FIG. 2, the AP 210 may include at least some of the aforementioned components (for example, the cellular module 221) in an embodiment.

According to an embodiment, the AP 210 or the cellular module 221 (for example, the communication processor) may load a command or data received from at least one of a non-volatile memory and other components connected thereto into a volatile memory and process the loaded command or data. Further, the AP 210 or the cellular module 221 may store data received from or generated by at least one of other components in a non-volatile memory.

For example, each of the Wi-Fi module 223, the BT module 225, the GPS module 227, and the NFC module 228 may include a processor for processing data transmitted/received through the corresponding module. Although the cellular module 221, the WiFi module 223, the BT module 225, the GPS module 227, and the NFC module 228 are illustrated as separate blocks in FIG. 2, at least some (for example, two or more) of the cellular module 221, the WiFi module 223, the BT module 225, the GPS module 227, and the NFC module 228 may be included in one Integrated Chip (IC) or one IC package in one embodiment. For example, at least some (for example, the communication processor corresponding to the cellular module 221 and the WiFi processor corresponding to the WiFi module 223) of the processors corresponding to the cellular module 221, the WiFi module 223, the BT module 225, the GPS module 227, and the NFC module 228 may be implemented as one SoC.

The RF module 229 may transmit/receive data, for example, RF signals. Although not illustrated in the drawing, the RF module 229 may, for example, include a transceiver, a Power Amp Module (PAM), a frequency filter, a Low Noise Amplifier (LNA), or the like. Further, the RF module 229 may further include a component for transmitting/receiving electronic waves over a free air space in wireless communication, for example, a conductor, a conducting wire or the like. Although the cellular module 221, the Wi-Fi module 223, the BT module 225, the GPS module 227, and the NFC module 228 share one RF module 229 in FIG. 2, at least one of the cellular module 221, the Wi-Fi module 223, the BT module 225, the GPS module 227, and the NFC module 228 may transmit/receive an RF signal through a separate RF module in one embodiment.

The SIM card 224 may be a card including a subscriber identification module, and may be inserted into a slot formed in a predetermined portion of the electronic device. The SIM card 224 may include unique identification information (for example, an integrated circuit card identifier (ICCID)) or subscriber information (for example, an international mobile subscriber identity (IMSI)). The memory 230 (for example, the memory 130) may include an internal memory 232 or an external memory 234. The internal memory 232 may include at least one of a volatile memory (for example, a Dynamic Random Access Memory (DRAM), a Static RAM (SRAM), a Synchronous Dynamic RAM (SDRAM), or the like) or a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, or the like).

According to an embodiment, the internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 234 may be functionally connected to the electronic device 201 through various interfaces. According to an embodiment, the electronic device 201 may further include a storage device (or storage medium) such as a hard drive.

The sensor module 240 measures a physical quantity or senses an operation state of the electronic device 201, and converts the measured or sensed information into an electric signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, an RGB sensor 240H, a biometric sensor 240I, a temperature/humidity sensor 240J, an illumination sensor 240K, and an Ultra Violet (UV) sensor 240M. Additionally or alternatively, the sensor module 240 may, for example, include an E-nose sensor (not shown), an electromyography (EMG) sensor (not shown), an electroencephalogram (EEG) sensor (not shown), an electrocardiogram (ECG) sensor (not shown), an Infrared (IR) sensor (not shown), an iris sensor (not shown), a fingerprint sensor (not shown), and the like. The sensor module 240 may further include a control circuit for controlling one or more sensors included therein.

The input device 250 may include a touch panel 252, a (digital) pen sensor 254, a key 256, or an ultrasonic input device 258. The touch panel 252 may detect a touch input in at least one of, for example, a capacitive type, a resistive type, an infrared type, and an acoustic wave type. The touch panel 252 may further include a control circuit. The capacitive type touch panel may detect a physical contact or proximity. The touch panel 252 may further include a tactile layer. In this case, the touch panel 252 may provide a user with a tactile reaction.

The (digital) pen sensor 254 may be implemented by, for example, using a method identical or similar to a method of receiving a touch input of a user, or using a separate recognition sheet. The key 256 may include, for example, a physical button, an optical key, or a keypad. The ultrasonic input device 258 is a device, which may identify data by detecting an acoustic wave with a microphone (for example, a microphone 288) of the electronic device 201 through an input unit generating an ultrasonic signal, and may perform wireless detection. According to an embodiment, the electronic device 201 may also receive a user input from an external device (for example, a computer or server) connected thereto by using the communication module 220.

The display 260 (for example, the display 150) may include a panel 262, a hologram device 264, or a projector 266. For example, the panel 262 may be, for example, a Liquid Crystal Display (LCD), an Active Matrix Organic Light Emitting Diode (AM-OLED), or the like. The panel 262 may be implemented to be, for example, flexible, transparent, or wearable. The panel 262 may be implemented by a single module together with the touch panel 252. The hologram device 264 may show a three dimensional image in the air by using an interference of light. The projector 266 may display an image by projecting light onto a screen. The screen may be located, for example, inside or outside the electronic device 201. According to an embodiment, the display 260 may further include a control circuit for controlling the panel 262, the hologram device 264, or the projector 266.

The interface 270 may include, for example, a High-Definition Multimedia Interface (HDMI) 372, a Universal Serial Bus (USB) 274, an optical interface 276, or a D-subminiature (D-sub) 278. The interface 270 may be included in, for example, the communication interface 160 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bidirectionally convert a sound and an electrical signal. At least some components of the audio module 280 may be included in, for example, the input/output interface 140 illustrated in FIG. 1. The audio module 280 may process voice information input or output through, for example, a speaker 282, a receiver 284, earphones 286, or the microphone 288. The camera module 291 is a device that may photograph still and moving images, and may include one or more image sensors (for example, a front sensor or a rear sensor, not shown), a lens (not shown), an image signal processor (ISP) (not shown), or a flash (for example, an LED or a xenon lamp, not shown) according to an embodiment.

The power management module 295 may manage power of the electronic device 201. Although not illustrated, the power management module 295 may include, for example, a Power Management Integrated Circuit (PMIC), a charger Integrated Circuit (IC), or a battery or fuel gauge. According to various embodiments, the PMIC may be mounted within an integrated circuit or an SoC semiconductor. Charging methods may be classified into a wired charging method and a wireless charging method. The charger IC may charge a battery and may prevent an overvoltage or excess current from being induced or flowing from a charger.

According to an embodiment, the charger IC may include a charger IC for at least one of the wired charging and the wireless charging. Examples of the wireless charging may include magnetic resonance charging, magnetic induction charging, and electromagnetic charging, and an additional circuit such as a coil loop, a resonance circuit, and a rectifier may be added for the wireless charging.

The battery gauge may measure, for example, a residual quantity of the battery 296, and a voltage, a current, or a temperature during the charging. The battery 296 may store or generate electricity and may supply power to the electronic device 201 using the stored or generated electricity. The battery 296 may include, for example, a rechargeable battery or a solar battery. The indicator 297 may display a specific state of the electronic device 201 or a part thereof (for example, the AP 210), for example, a boot-up state, a message state, or a state of charge (SOC). The motor 298 may convert an electrical signal into a mechanical vibration. Although not illustrated, the electronic device 201 may include a processing device (for example, a GPU) for supporting mobile TV. The processing unit for supporting mobile TV may process, for example, media data pursuant to a certain standard of Digital Multimedia Broadcasting (DMB), Digital Video Broadcasting (DVB), or media flow.

Each of the above-described elements of the electronic device according to various embodiments of the present disclosure may include one or more components, and the name of a corresponding element may vary according to the type of electronic device. The electronic device according to various embodiments of the present disclosure may include at least one of the above-described elements and may exclude some of the elements or further include other additional elements. Further, some of the elements of the electronic device according to various embodiments of the present disclosure may be coupled to form a single entity while performing the same functions as those of the corresponding elements before the coupling.

Hereinafter, a method for scanning neighboring devices and an electronic device thereof according to various example embodiments of the present disclosure will be explained in detail. The electronic device according to various example embodiments of the present disclosure may be a wearable electronic device such as a smart watch, smart glasses, and the like as well as a smart phone, a tablet PC, and the like, or an electronic device in the form of a home appliance provided with a wireless communication function, such as a TV, an air conditioner, a fan, and the like. The electronic device may include the entirety or part of the elements shown in FIGs. 1 and 2. According to various example embodiments of the present disclosure, the electronic device can efficiently scan neighboring devices by being directed to the neighboring devices located in a desired direction or in desired direction and distance through various wireless communications such as BT, WiFi, BLE, LTE, and the like.

According to various example embodiments of the present disclosure, the electronic device can directionally scan the neighboring devices located in a desired direction or in desired direction and distance using an onmi-directional antenna, BLE communication, and beacon signals.

According to various example embodiments of the present disclosure, the electronic device can directionally scan the neighboring devices located in a desired direction or in desired direction and distance using a directional antenna, WiFi communication, an mm-wave frequency, and beacon signals. In addition, the electronic device can directionally scan desired neighboring devices using various wireless communications.

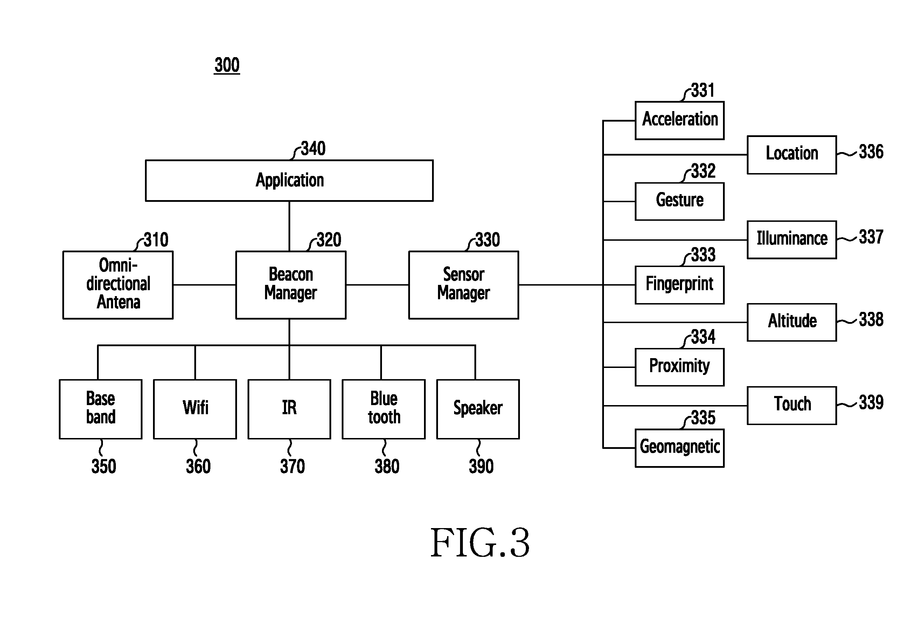

FIG. 3 illustrates a view showing some of the elements of an electronic device 300 according to various example embodiments of the present disclosure. Referring to FIG. 3, the electronic device 300 may include an omni-directional antenna 310, a beacon manager 320, a sensor manager 330, an application 340, a baseband module 350, a WiFi module 360, an infrared ray module 370, a Bluetooth module 380, a speaker 390, etc.

The sensor manager 330 may manage various sensors, such as an acceleration sensor 331, a gesture sensor 332, a fingerprint sensor 333, a proximity sensor 334, a geomagnetic sensor 335, a location sensor 336, an illuminance sensor 337, an altitude sensor 338, a touch sensor 339, and the like, and may be integrated into a single element with the beacon manager 320 or may interwork with the beacon manager 320 as a separate element.

The beacon manager 320 drives at least one of the modules as the application 340 is executed, and the module may output beacon signals received through a wireless network to the beacon manager 320. The beacon manager 320 may control an operation of transmitting and receiving beacon signals based on a variety of sensor information inputted through the sensor manager 330, and may be included in the processor of FIG. 1 or may interwork with the processor as a separate element.

The beacon manager 320 may control an operation of transmitting beacon signals generated in the application 340, or may directly generate beacon signals according to a request of the application 340. The beacon manager 320 may be included in the application to manage a beacon operation for each application, or may exist outside the application to manage beacon operations of a plurality of applications.

The beacon manager 320 may be included in each of the baseband module, the WiFi module, the infrared ray module, the Bluetooth module, and the speaker.

The beacon operation may be controlled according to a control command which is generated in the beacon manager 320, and the beacon signals may be transmitted (for example, broadcasting) through a module which can transmit and receive the beacon signals.

The module which can transmit and receive the beacon signals may be one of the baseband module, the WiFi module, the infrared ray module, the Bluetooth module, and the speaker, and the omni-directional antenna 310 may be included in the module which can transmit and receive the beacon signals or may be a separate element, and may be integrally formed with the case of the electronic device or may be a separate element.

According to various example embodiments of the present disclosure, the Bluetooth module may be used as the module which can transmit and receive the beacon signals, and the Bluetooth module may transmit the beacon signals, which can wirelessly communicate with electronic devices within 70 m to the maximum based on the Bluetooth 4.0 (BLE) protocol, in all directions through the omni-directional antenna 310.

For reference, the beacon signals based on the Bluetooth 4.0 (BLE) protocol may be called iBeacon signals which are indicated by a specific company, for example, Apple Inc. Hereinafter, however, all of the beacon signals based on the Bluetooth 4.0 (BLE) protocol will be referred to as beacon signals. The Bluetooth module may include predetermined directional information in a beacon frame or a beacon packet, and transmit the beacon frame or the beacon packet in order to scan the neighboring devices in a desired direction or in desired direction and distance.

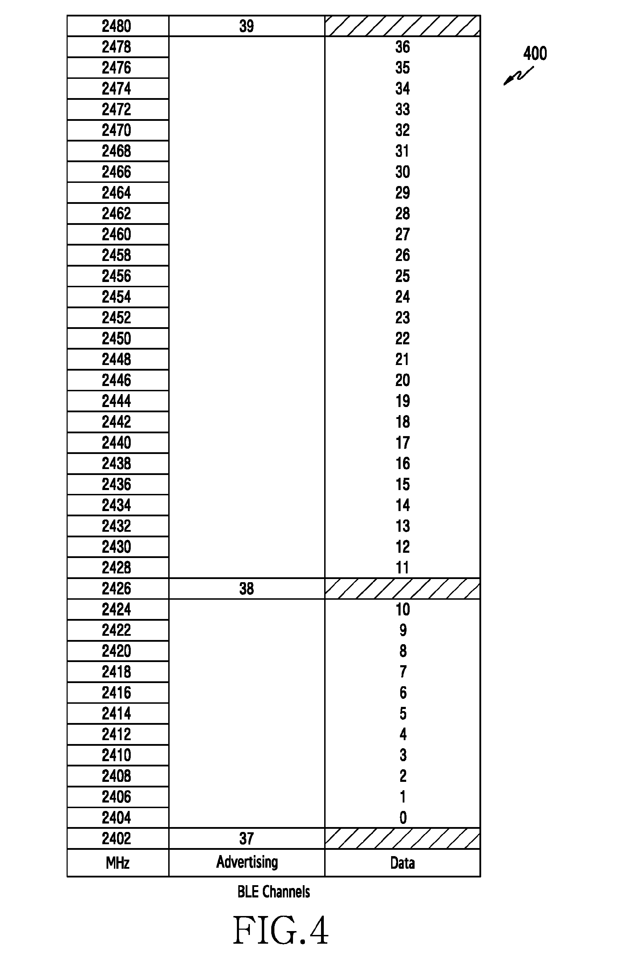

FIG. 4 illustrates a view showing an example of a configuration of BLE channels according to various example embodiments of the present disclosure. Referring to FIG. 4, the BLE wireless communication may have 40 channels formed of 2 MHz bandwidth in the 2.4 GHz band, and channel numbers 37, 38, and 39 from among the 40 channels may be allocated as advertising channels, and the other channels may be allocated as data channels.

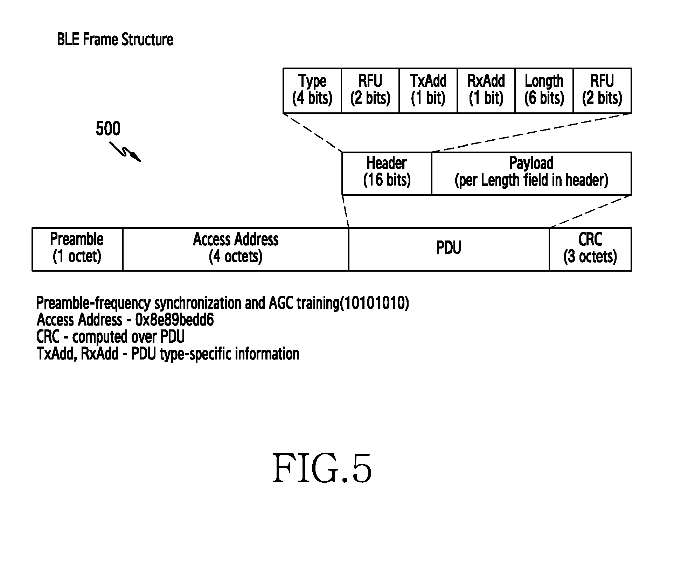

FIG. 5 illustrates a view showing an example of a BLE frame structure according to various example embodiments of the present disclosure. Referring to FIG. 5, for example, the BLE frame 500, which is transmitted through the advertising channels, may include a preamble of 1 octet corresponding to 8 bits, an access address of 4 octets, a Protocol Data Unit (PDU), and a Cyclic Redundancy Check (CRC) of 3 octets.

The preamble may be used for frequency synchronization and Automatic Gain Control (AGC) training, and the access address may include a value of 0x8E89BED6 as an access address value, for example. The PDU may be divided into a header part and a payload part, and the CRC may include a code value for detecting a data transmission error.

The header of the PDU may be allocated 16 bits, and the payload of the PDU may be allocated N bit(s) according to a length field value included in the header.

The header of the 16 bits may be formed of a type field of 4 bits, a Reserved For Future Use (RFU) field of 2 bits, a TxAdd field of 1 bit, an RxAdd field of 1 bit, a length field of 6 bits, and an RFU field of 2 bits.

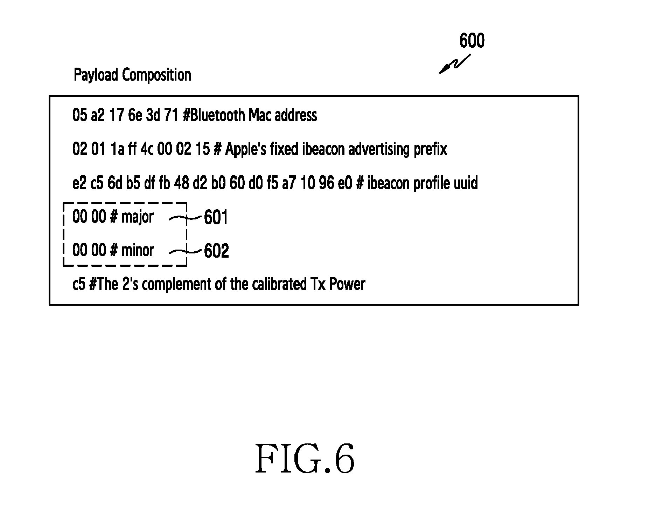

FIG. 6 illustrates a view showing an example of a composition of a payload 600 of a PDU according to various example embodiments of the present disclosure. Referring to FIG. 6, the payload 600 of the PDU may include a value of 05 a2 17 6e 3d 71 indicating a Bluetooth MAC address, a value of 02 01 1a 1a ff 4c 00 02 15 indicating the Apple's fixed "ibeacon" advertising prefix, and a value of e2 c5 6d b5 df fb 48 d2 b0 60 d0 f5 a7 10 96 e0 indicating an "ibeacon" profile Universally Unique Identifier (UUID).

In addition, the payload 600 of the PDU may include a major field 601, a minor field 602, and the 2's complement of the calibrated Tx power.

According to various example embodiments of the present disclosure, the UUID may be generated according to the RFC 4122 standard, for example, and the UUID may be used as a service identifier.

For example, an electronic device (for example, a beacon transmitter, Tx) installed in a specific place (for example, a Starbucks coffee shop) may include a UUID allocated to the specific place in a beacon signal and transmit the beacon signal, and an electronic device (for example, a beacon receiver, Rx), which receives the beacon signal in the specific place, may identify the UUID included in the beacon signal and determine that the current position is the specific place (for example, the Starbucks coffee shop) or is around the specific place.

The electronic device (for example, the beacon transmitter, Tx) installed in the specific place may transmit a transmission power value in the beacon signal and transmit the beacon signal, and the electronic device (for example, the beacon receiver, Rx) which receives the beacon signal in the specific place may identify the transmission power value included in the beacon signal, compare the transmission power value and a signal intensity value of the really received beacon signal, and calculate a distance to the electronic device (for example, the beacon transmitter, Tx) which transmitted the beacon signal.

The electronic device (for example, the beacon receiver, Rx) which receives the beacon signal may perform a certain operation based on various values included in the beacon signal. For example, the electronic device may perform various operations, such as launching a specific application which is designated by the various values included in the beacon signal, or accessing a server which provides a specific content (for example, an advertisement of a Starbucks coffee shop, a coffee buying discount coupon, etc.).

According to various example embodiments of the present disclosure, the electronic device (for example, the beacon transmitter, Tx) installed in the specific place may include a desired direction and location information in the beacon signal using the major field 601 and the minor field 602 included in the payload, and transmit the beacon signal.

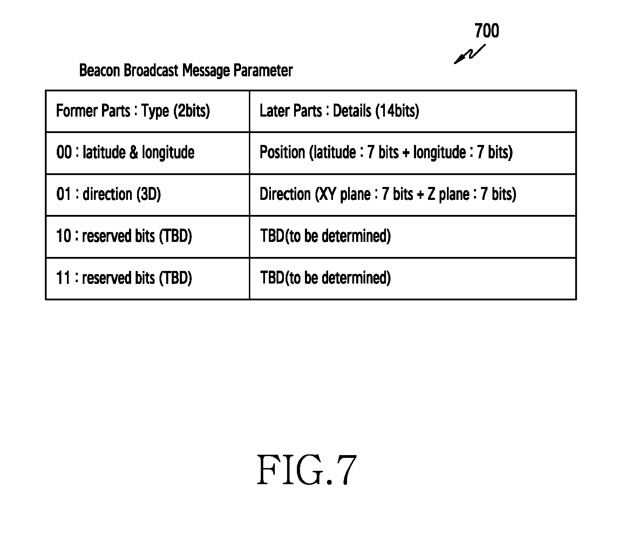

FIG. 7 illustrates a view showing an example of a beacon broadcast message parameter 700 according to various example embodiments of the present disclosure. The beacon broadcast message parameter 700 may be transmitted to neighboring devices using the major field and the minor field of 16 bits included in the payload of the PDU.

Referring to FIG. 7, the former 2 bits (b0, b1) of the major field and the minor field of the 16 bits may be used as header information, and the other latter 14 bits (b3-b15) may be used as detail information.

For example, when the header information of the 2 bits from among the 16 bits is 00, the detail information of the latter 14 bits indicates latitude and longitude values, and, when the header information of the 2 bits from among the 16 bits is 01, the detail information of the latter 14 bits indicates a 3-dimensional (3D) direction value.

According to various example embodiments of the present disclosure, when the header information of the 2 bits is 00, a latitude value of 7 bits and a longitude value of 7 bits may be recorded on the detail information of the 14 bits as location information.

According to various example embodiments of the present disclosure, when the header information of the 2 bits is 01, an XY direction value of 7 bits and a Z direction value of 7 bits may be recorded on the detail information of the 14 bits as 3D direction information.

According to various example embodiments of the present disclosure, when the header information of the 2 bits is 10 or 11, a undefined value may be recorded on the detail information of the 14 bits, and the header information 10 or 11 of the 2 bits and the detail information of the 14 bits related thereto may be newly defined and used when beneficial.

For example, considering both a situation in which a picture is taken as in a scenario and a range in which a BLE beacon packet can be technically transmitted, the beacon packet can be transmitted by about 1-10 meters (20 meters to the maximum). If the transmissible distance of the beacon packet is expressed by the latitude and longitude, five or four decimal places may be a meaningful number.

In addition, this distance is calculated considering that 1 degree of latitude on the ground is converted into about 111,640 m (about 105 m), and 4 bits are utilized to express five decimal places (0-9) and 7 bits are utilized to express four to five decimal places (00-99). The above-described calculation may be equally applied to the longitude.

That is, in order to express the latitude and longitude as location information satisfying the above-described condition, at least 8 bits or 14 bits may be allocated and displayed, and the header information of the 2 bits may be utilized to distinguish between the display of the 8 bits and the display of the 14 bits. In this case, one of the value of 10 or the value of 11 which are undefined in the header information of the 2 bits may be allocated to distinguish between the display of the 8 bits and the display of the 14 bits.

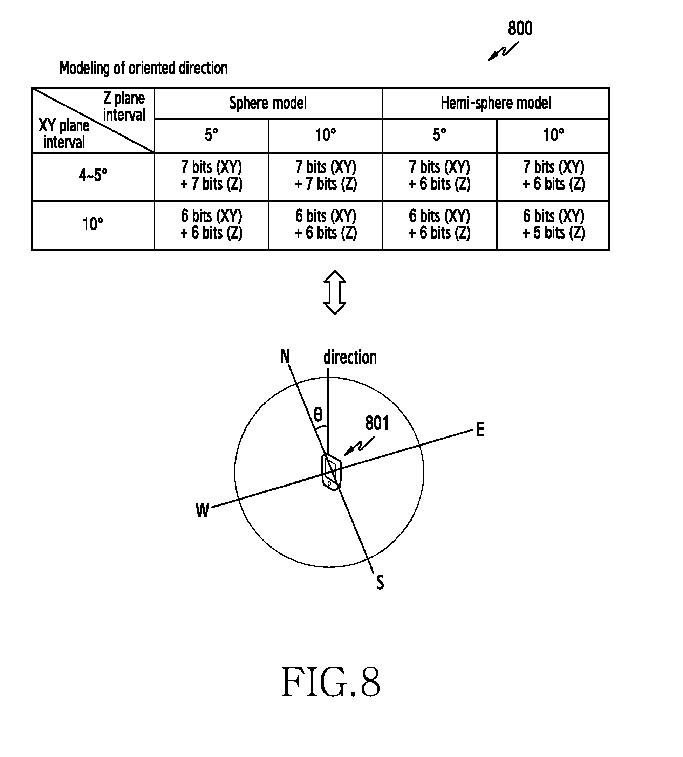

FIG. 8 illustrates a view showing an example of modeling of an oriented direction according to various example embodiments of the present disclosure. According to various example embodiments of the present disclosure, when the header information of the 2 bits is 01, the XY direction value of 7 bits and the Z direction value of 7 bits may be recorded on the detail information of the latter 14 bits as 3D direction information on a desired target neighboring device to be scanned.

Referring to FIG. 8, azimuth (θ) for directing an electronic device 801 to a desired target neighboring device to be scanned may be displayed with reference to the N pole which is measured by a sensor provided in the electronic device 801, for example, a gyroscopic compass sensor.

For example, an appropriate numerical value may be designed to allocate 360° as the detail information of the 14 bits. In the case of the XY plane, if 360 degrees are divided by 5 degrees, the XY plane is divided into 72 sections in total, and, if this value is expressed by binary operation, 7 bits in total are utilized. On the other hand, if 360 degrees are divided by 10 degrees, the XY plane can be quantized to 36 sections in total and thus 6 bits are utilized.

If the Z plane is a sphere and 360 degrees are divided by 5 degrees, the Z plane is divided into 72 sections in total and thus 7 bits are utilized. On the other hand, if the Z plane is a hemi-sphere and 180 degrees are divided by 5 degrees, the Z plane may be quantized to 36 sections in total and thus 6 bits are utilized.

The electronic device (for example, the beacon transmitter, Tx) may include one or more of direction information and location information for scanning neighboring devices located in a desired direction or in desired direction and location in the beacon signal, and transmit the beacon signal.

In addition, the electronic device (for example, the beacon receiver, Rx) which receives the beacon signal may determine whether the received beacon signal is valid or not based on one or more of the direction information and the location information included in the beacon signal, and perform various operations, such as wirelessly communicating with the electronic device (for example, the beacon transmitter, Tx) which transmitted the beacon signal, launching a specific application based on the various values included in the beacon signal, or accessing a server which provides a specific content.

Accordingly, the electronic device according to various example embodiments of the present disclosure can directionally scan the neighboring devices located in a desired direction or in desired direction and distance using an omni-directional antenna, BLE communication, and a beacon signal.

According to various example embodiments of the present disclosure, the electronic device can directionally scan the neighboring devices located in a desired direction or in desired direction and distance using a directional antenna, WiFi communication based on the mm-wave (millimeter waver) frequency, and a beacon signal.

For example, the electronic device may use a beamforming method of a directional antenna and use WiFi 802.11ad as a communication method based on 60 GHz or 28 GHz mm-wave to scan neighboring devices.

When the electronic device scans neighboring devices using the mm-wave frequency-based beamforming method, the electronic device may transmit a scan request message to the neighboring devices and receive a scan response message from the neighboring devices.

According to various example embodiments of the present disclosure, the method for directionally scanning the neighboring devices using the scan request message and the scan response message can efficiently use network resources and can more accurately scan the neighboring devices compared with the method for scanning the neighboring devices using the omni-directional antenna.

The method for scanning the neighboring devices using the directional antenna may be implemented according to more example embodiments as long as beamforming is possible even when frequencies other than 60 GHz, for example, other frequencies such as 28 GHz, are used. Even when the WiFi communication of 802.11 family is used, beams can be formed using various antennas to achieve Multiple-Input and Multiple Output (MIMO).

One of the characteristics of the mm-wave frequency is directivity. It may be appropriate to use the mm-wave frequency to directionally communicate with a specific electronic device facing the electronic device. The mm-wave frequency may be applied to various services for recognizing and controlling electronic devices located within the line of sight.

According to various example embodiments of the present disclosure, an electronic device which requests scanning and electronic devices which respond to the scan request may grasp relative locations of their counterpart electronic devices by simply transmitting and receiving the scan request/response messages to and from the other electronic devices located within the line of sight.

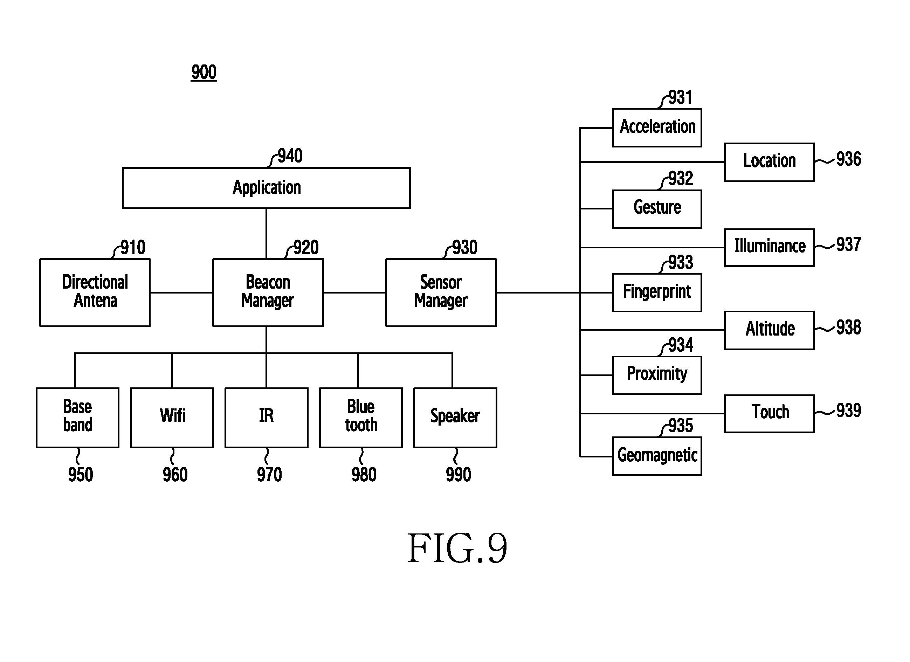

FIG. 9 illustrates a view showing some elements of an electronic device 900 according to various example embodiments of the present disclosure. Referring to FIG. 9, the electronic device 900 may include a directional antenna 910 (an array antenna for beamforming), a beacon manager 920, a sensor manager 930, an application 940, a baseband module 950, a WiFi module 960, an infrared ray module 970, a Bluetooth module 980, a speaker 990, etc.

The sensor manager 930 may manage various sensors, such as an acceleration sensor 931, a gesture sensor 932, a fingerprint sensor 933, a proximity sensor 934, a geomagnetic sensor 935, a location sensor 936, an illuminance sensor 937, an altitude sensor 938, a touch sensor 939, and the like, and may be integrated into a single element with the beacon manager 920 or may interwork with the beacon manager 920 as a separate element.

The beacon manager 920 drives at least one of the modules as the application 340 is executed, and the module may output beacon signals received through a wireless network to the beacon manager 920. The beacon manager 920 may control an operation of transmitting and receiving beacon signals based on a variety of sensor information inputted through the sensor manager 930, and may be included in the processor of FIG. 1 or may interwork with the processor as a separate element.

The beacon manager 920 may control an operation of transmitting beacon signals generated in the application 940 or may directly generate beacon signals according to a request of the application 940. The beacon manager 920 may be included in the application to manage a beacon operation for each application, or may exist outside the application to manage beacon operations of a plurality of applications.

The beacon manager 920 may be included in each of the baseband module, the WiFi module, the infrared ray module, the Bluetooth module, and the speaker.

The beacon operation may be controlled according to a control command which is generated in the beacon manager 920, and the beacon signals may be transmitted through a module which can transmit and receive the beacon signals. The module which can transmit and receive the beacon signals may be one of the baseband module, the WiFi module, the infrared ray module, the Bluetooth module, and the speaker, and the directional antenna 910 may be included in the module which can transmit and receive the beacon signals or may be a separate element, and may be integrally formed with the case of the electronic device or may be a separate element.

According to various example embodiments of the present disclosure, the WiFi module may be used as the module which can transmit and receive the beacon signals, and the WiFi module may use WiFi 802.11ad, which is a communication method based on 60 GHz or 28 GHz mm-wave frequency, and may transmit the beacon signals in a specific direction using the beamforming method of the directional antenna 910.

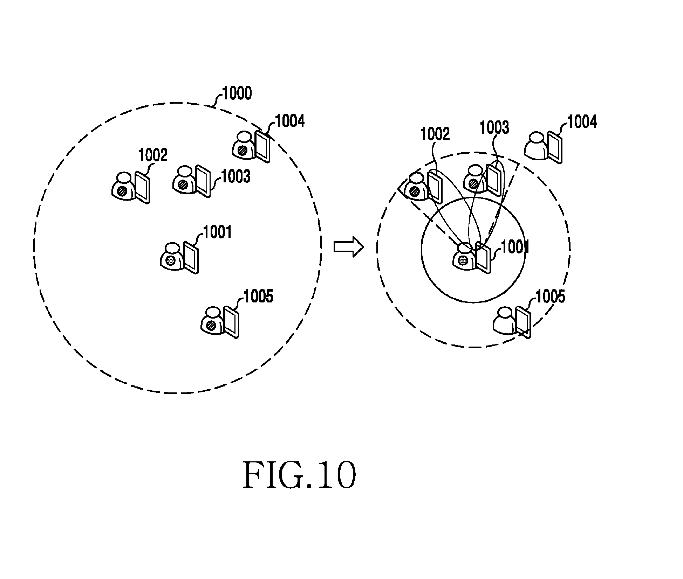

FIG. 10 illustrates a view showing an electronic device 1001 which directionally scan neighboring devices using a directional antenna according to various example embodiments of the present disclosure. Referring to FIG. 10, the electronic device 1001 (which is installed, or moves to or otherwise located in the specific place 1000), may be directed to scan the neighboring devices 1002 and 1003 disposed in a particular direction or in a particular direction combined with a particular distance, from among the neighboring devices 1002-1004, according to the beamforming method using the directional antenna.

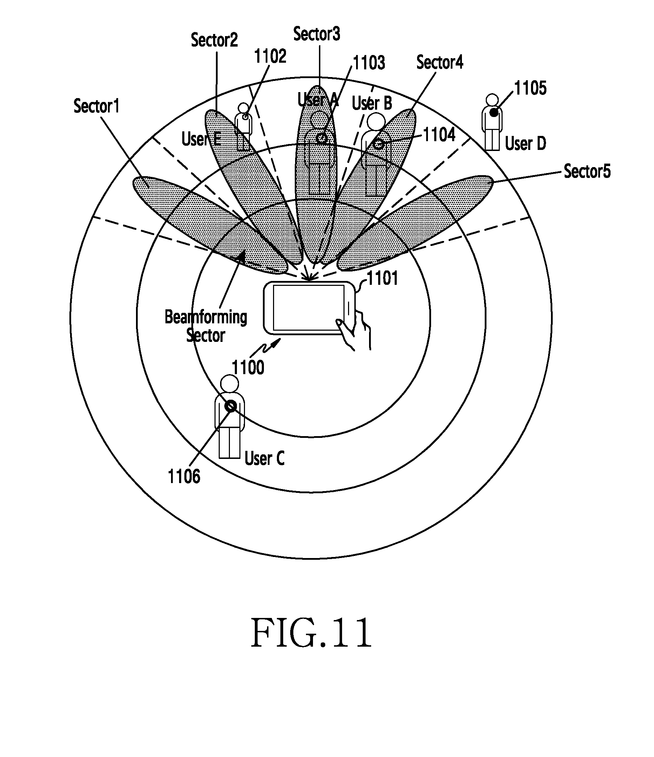

FIG. 11 illustrates a view showing an example of an electronic device 1100 which may scan neighboring devices in the unit of a plurality of sectors using a directional antenna according to various example embodiments of the present disclosure. Referring to FIG. 11, the directional antenna (not shown) of the electronic device 1100 may be directed towards a certain direction by the user.

For example, the direction to which the directional antenna of the electronic device 1100 (such as a smart phone) is directed may be designed in various methods to be consistent with the opposite direction of a screen 1101 formed on a front surface of the electronic device 1100, or may be designed to be consistent with a direction in which a top of the screen 1101 is oriented when the electronic device 1100 is positioned horizontally.

According to various example embodiments of the present disclosure, the user may orient the electronic device 1100 towards a specific direction, and then may, for example, select a "neighboring device scan" button displayed on the screen 1101 of the electronic device, or execute a neighboring device scan application, thereby initiating the scan.

The electronic device 1100 may generate a beacon signal in an mm-wave frequency, and transmit the beacon signal through a plurality of beamforming sectors 1-5 via the directional antenna in order to scan the neighboring devices 1102-1104 that are located in the specific direction, or in the specific direction and desired distance of the electronic device, thus sweeping certain devices from among the plurality of neighboring devices 1102-1106.

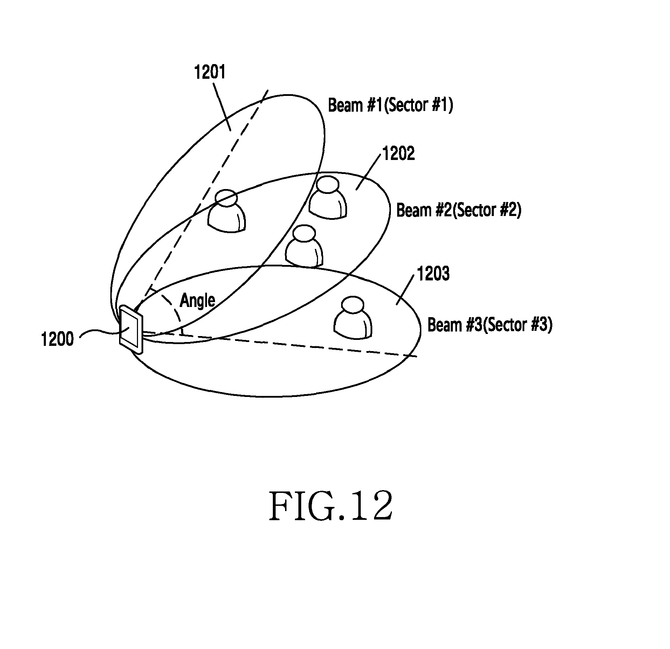

FIG. 12 illustrates a view showing an example of an electronic device 1200 which scans neighboring devices within a predetermined angle in a beamforming method using a directional antenna according to various example embodiments of the present disclosure. Referring to FIG. 12, the electronic device 1200 may divide the predetermined angle for scanning in the specific directions using a pre-set beamforming unit angle.

For example, when the predetermined angle for scanning is between 25 and 100 degrees with reference to the XY plane, and the pre-set beamforming unit angle is 25 degrees, the electronic device 1200 may control the directional antenna to transmit a beacon signal by sequentially beamforming a first beam (beam #1) 1201 of 25-50 degrees corresponding to a first sector (sector #1), a second beam (beam #2) 1202 of 50-75 degrees corresponding to a second sector (sector #2), and a third beam (beam #3) 1203 of 75-100 degrees corresponding to a third sector (sector #3), and scan the neighboring devices.

Herein, the first to third beams 1201-1203, which sequentially scan from the first to the third sectors may overlap one another to some degree, as shown in FIG. 12. This may be implemented to prevent an empty space from being formed between these beams.

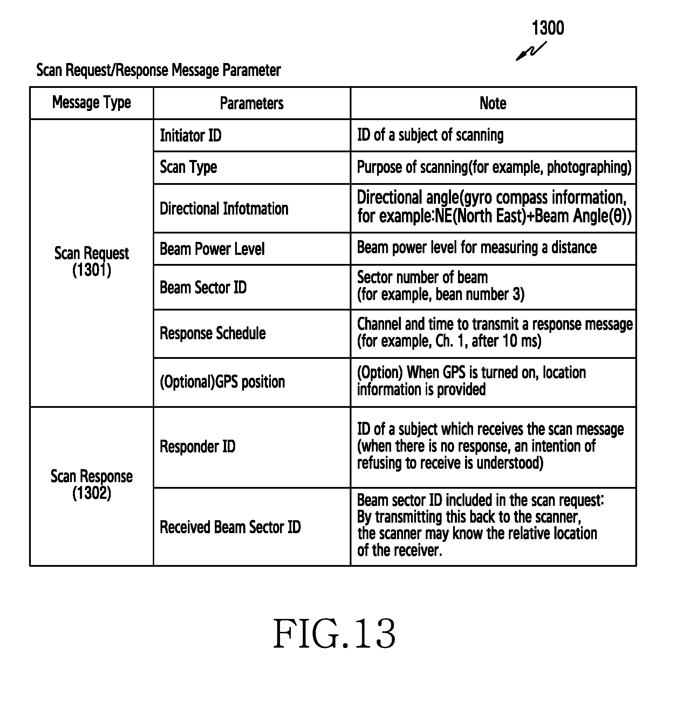

FIG. 13 illustrates a view showing an example of parameters 1300 of a scan request message and a scan response message according to various example embodiments of the present disclosure. Referring to FIG. 13, the scan request message 1301 may include an initiator ID as information indicating an identifier of an electronic device which is a subject of a scan operation, and a scan type as information indicating a purpose of a scan operation (for example, photographing) or an event.

The scan request message 1301 may include directional information as information indicating a scan direction such as a directional angle (for example, gyro compass information), and a beam power level as information for measuring distance.

The scan request message 1301 may include a beam sector ID as information indicating a sector number or identifier of beam, and a response schedule as information for designating a channel and time to transmit the scan response message (for example, channel 1 and after 10 ms) in a neighboring device which receives the scan request message. In addition, the scan request message 1301 may include GPS information as information indicating location information when the GPS module in the electronic device is turned on.

The GPS information is optional information which may be included in the scan request message 1301 or may not be included therein, whereas the directional information is essential information for restrictedly scanning the neighboring devices in a specific direction. The beam power level is information for restrictedly scanning the neighboring devices within a specific distance and may be included in the scan request message.

According to various example embodiments of the present disclosure, both the directional information and the beam power level may be included in the scan request message 1301 or one of the directional information and the beam power level may be included in the scan request message 1301.

The scan response message 1302 may include a responder ID as information indicating an identifier of a neighboring device (for example, a responder) which receives the scan request message. The neighboring device which receives the scan request message may be set not to respond to a neighboring device scan request for the sake of privacy protection.

The scan response message 1302 may include a received beam sector ID as information indicating a beam sector identifier which receives the scan request message. The received beam sector ID is information for transmitting the beam sector identifier in the scan request message received by the neighboring device back to the electronic device which transmitted the scan request message.

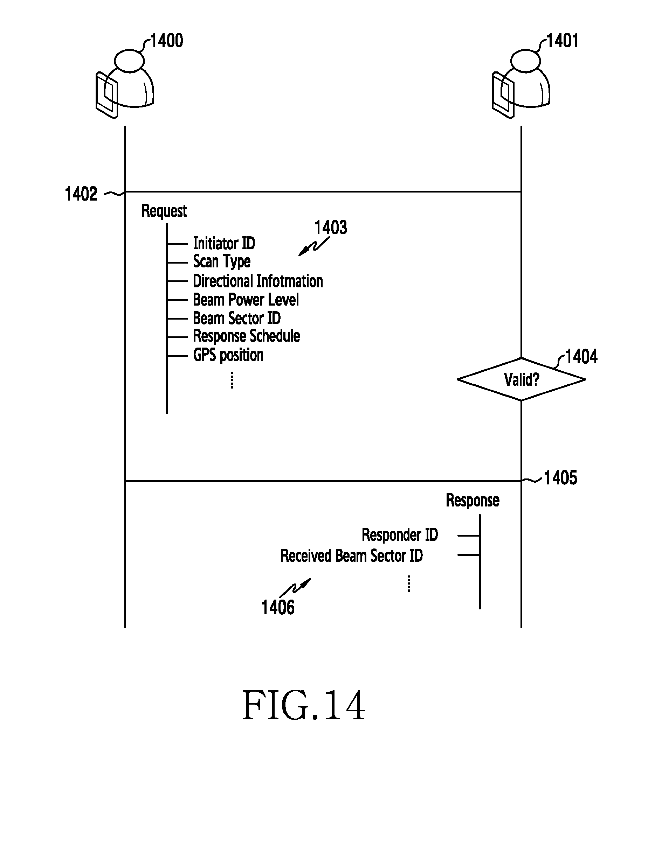

FIG. 14 illustrates a flowchart showing an example of an operation between an electronic device 1400 and a neighboring device 1401 according to various example embodiments of the present disclosure. Referring to FIG. 14, the electronic device 1400 (for example, a scanner or an initiator) which is a subject of a neighboring device scanning operation may generate a scan request message 1403 of a beacon signal, and repeat a beamforming operation for transmitting the scan request message 1403 in a particular beam sector through a directional antenna in sequence.

For example, when the electronic device 1400 transmits the scan request message 1403 in the unit of a certain beam sector (for example, sector #1) in operation 1402, the scan request message 1403 may include an initiator ID, a scan type, directional information, a beam power level, a beam sector ID, and a response schedule, and may include GPS information as optional information.

When the neighboring device (for example, a responder) 1401 located within the unit of the certain beam sector (for example, sector #1) receives the scan request message 1403, the neighboring device determines whether the scan request message 1403 is valid or not in operation 1404.

For example, the neighboring device 1401 may be set not to respond to the neighboring device scan request for the sake of privacy protection. In this case, the neighboring device 1401 may determine that the scan request message is not valid and may decline or otherwise refuse to respond.

On the other hand, when the neighboring device 1401 determines that the scan request message is valid, the neighboring device 1401 may generate a scan response message 1406 to respond to the scan request message 1403 and transmit the scan response message 1406 to the electronic device 1400 in operation 1405.

Herein, the scan response message 1406 may include a responder ID and a received beam sector ID, and may be transmitted in various methods through a directional antenna or an omni-directional antenna.

For example, when the neighboring device 1401 transmits the scan response message 1406 through the directional antenna, the neighboring device 1401 may transmit the scan response message 1406 by beamforming towards the particular sector (for example, sector #1) from which the scan request message 1403 is received. However, when a response message (for example, an "ACK" message indicating whether the message was received) is not received from the electronic device 1400, the neighboring device 1401 may retransmit the scan response message 1406 by beamforming towards another sector (for example, sector #0 or sector #2) adjacent to the particular sector. This may thereby prevent a communication error which may typically occur when the electronic device 1400 moves to another location.

The neighboring device 1401 which receives the scan request message 1403 may identify the ID of the initiator in the scan request message (for example, a MAC address, etc.) and the directional information (for example, a directional angle), and calculate a relative distance between the electronic device 1400 (initiator) which executes the scanning operation, and the neighboring device 1401.

The neighboring device 1401 may identify the response schedule in the scan request message 1403, determine a channel and time to transmit the scan response message 1406, and then transmit the scan response message 1406 according to the corresponding channel and time.

The electronic device 1400 may identify the responder ID included in the scan response message 1406 and identify the neighboring device 1401, and may identify the beam sector ID included in the scan response message 1406 and calculate a relative distance between the electronic device 1400 and the neighboring device 1401.

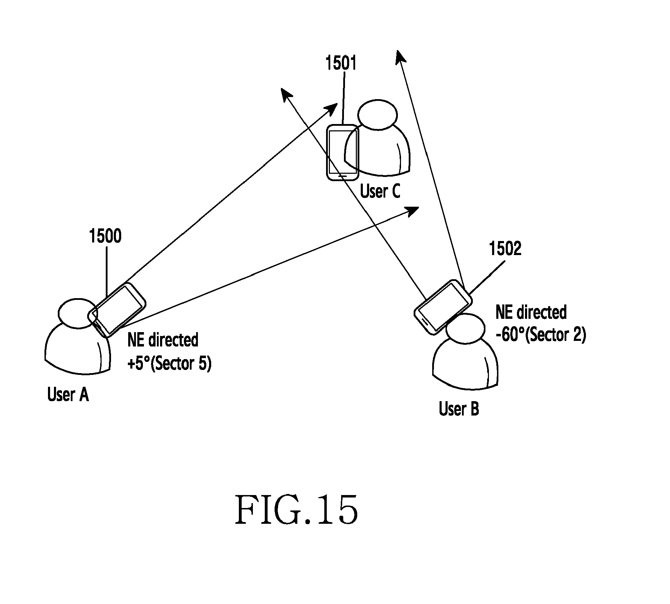

FIG. 15 illustrates a view showing an example of exchange of directional information and a displacement angle between an electronic device 1500,a neighboring device 1501, and yet a third device 1502, according to various example embodiments of the present disclosure. Referring to FIG. 15, directional information which is acquired by a gyro compass sensor and a displacement angle (θ) formed with reference to a specific directing point may be exchanged between the electronic device 1500 or 1502, which executes a scanning operation, and the neighboring device 1501 which is a target to be scanned.

According to various example embodiments of the present disclosure, the locations of neighboring devices can be found more efficiently and a map can be made without using GPS information, which utilizes much network resources and may not be accurate information.

This provides assistance in making a map for indoor navigation based on a location-based service (LBS), and may be usefully applied to the inside or outside of a building where a location sensing device is not provided like the LBS system.

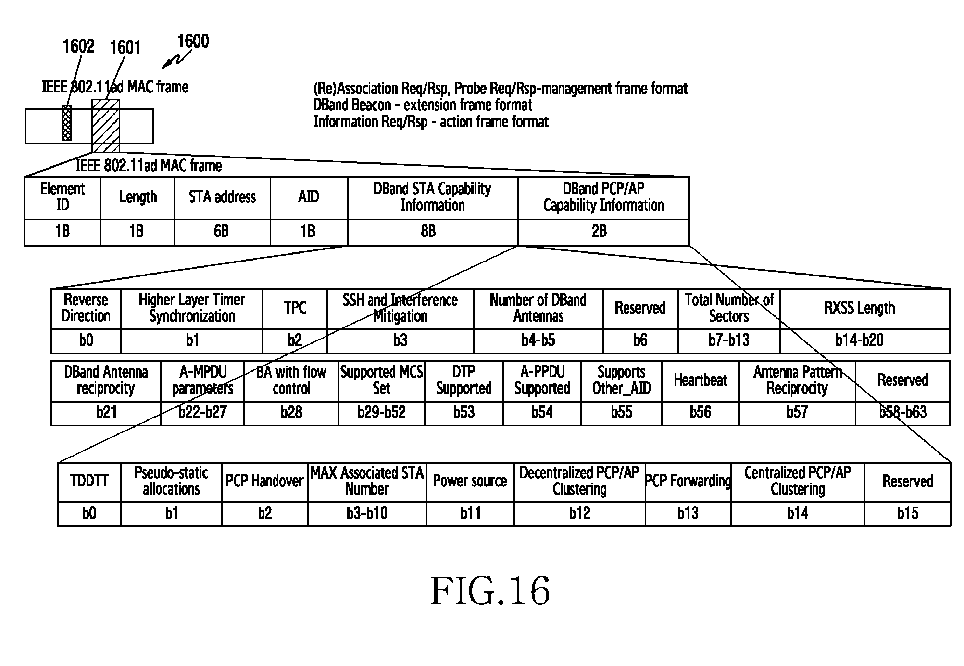

FIG. 16 illustrates a view showing an example of an IEEE 802.11ad MAC frame 1600 including a scan request message and a scan response message according to various example embodiments of the present disclosure. Referring to FIG. 16, the IEEE 802.11ad MAC frame 1600 may include a directional band (DBand) capability information element 1601.

According to various example embodiments of the present disclosure, parameters 1602 of the scan request message and the scan response message may be included in the DBand capability information element 1601 of the IEEE 802.11ad MAC frame 1600, or may be included in the form of a vendor specific information element other than the DBand capability information element. The parameters of the scan request message and the scan response message may be included in a beacon frame, a DBand beacon frame, a probe request frame, a probe response frame, etc.

According to various example embodiments of the present disclosure, the parameters of the scan request message and the scan response message may be included in a message on an upper layer (for example, an application layer) above the MAC.

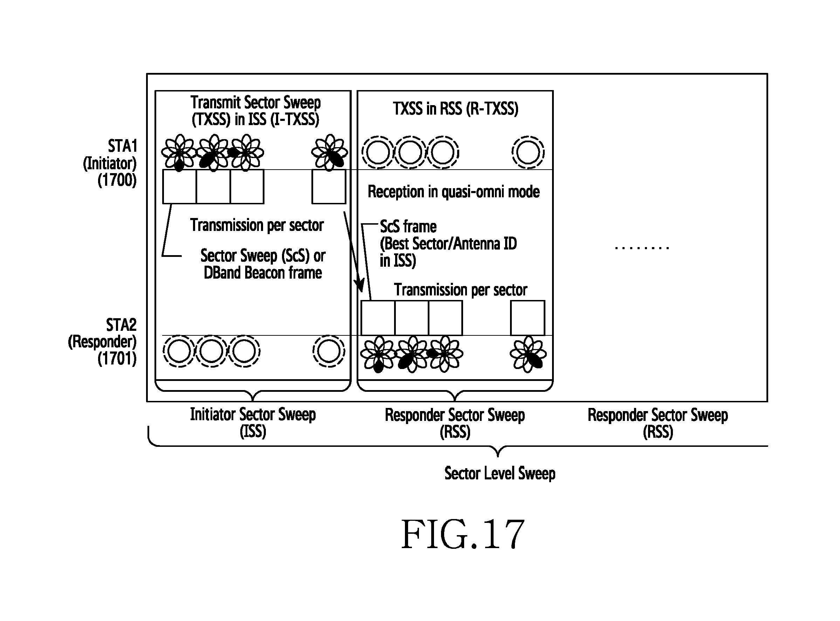

FIG. 17 illustrates a view showing a sector level sweep operation according to various example embodiments of the present disclosure. Referring to FIG. 17, the scan request message may be implemented in the form of a message which is transmitted by an initiator during DBand beamforming, which is considered in the IEEE 802.11ad. Referring to FIG. 17, the scan response message may be implemented in the form of a message which is transmitted by a responder during DBand beamforming, which is considered in the IEEE 802.11ad.

More specifically, the scan request message and the scan response message which are transmitted and received between an electronic device 1700 (for example, an initiator) which is a subject of a scanning operation, and a neighboring device 1701 (for example, a responder) which is a target to be scanned may be implemented by using various Sector Level Sweeps (SLSs) considering the directional information.

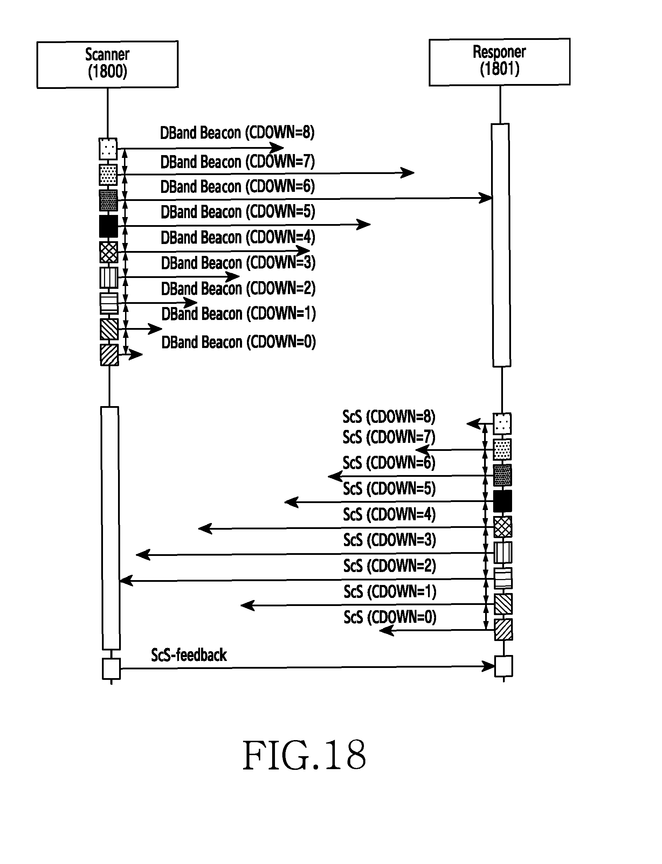

FIG. 18 illustrates a view showing an example of a process of scanning a counterpart device in a super frame structure according to various example embodiments of the present disclosure. Referring to FIG. 18, an electronic device 1800 (for example, a scanner), which is a subject of a scanning operation, may generate a DBand beacon by including parameters of a scan request message therein, and may direct and transmit the Dband beacon in the unit of each sector as described above with reference to FIG. 16.

The electronic device 1800 counts down while transmitting the DBand beacon in the unit of each sector. For example, when the electronic device 1800 transmits the DBand beacon while directing the Dband beacon to 9 sectors in sequence, the count down value CDOWN is 0-8.

For example, FIG. 18 illustrates that the DBand beacon which is transmitted by the electronic device 1800 through the sixth sector arrives at a neighboring device (for example, a responder) 1801 which is a target to be scanned.

The neighboring device 1801 may support the mm-wave beamforming like the electronic device 1800, and transmit a scan response message through a Sector Sweep Frame (ScS). In addition, the syntax of the ScS frame, the ScS-feedback frame, and the ScS-ACK frame may include the parameters according to various example embodiments of the present disclosure, and the parameters may be added to the above-described frames as a vendor-specific element.

The neighboring device 1801 may approximately estimate the relative location of the electronic device 1800 and may not transmit the ScS frame through all of the sectors. Accordingly, a faster scanning or beamforming effect can be achieved.

The parameters of the scan request message and the scan response message according to various example embodiments of the present disclosure may be added as syntaxes of a protocol related to directional scanning in the IEEE 802.11 ax, which is being additionally standardized, such as sector sweep (SSW) and a Beam Refinement Protocol (BRP).

According to various example embodiments of the present disclosure, the method for scanning the neighboring devices with directivity may be applied to Neighborhood Area Network (NAN) wireless communication along with the beamforming technology. In addition, various technologies for adjusting a beam width to enhance the speed of Sector Level Sweep (SLS) are well known, and thus may be used with the scanning method according to various example embodiments of the present disclosure.

In addition, when the WiFi is turned off, but an option "scanning always allowed" is turned on, an electronic device to which the Android version 4.3 or later is applied, such as a smart phone, can perform WiFi scanning and thus the example embodiments of the present disclosure can be easily applied to real products.

The method for scanning the neighboring devices using the omni-directional antenna and the method for scanning the neighboring devices using the directional antenna according to various example embodiments of the present disclosure may be converted into each other according to a network situation or location of the electronic device which is the subject of the scanning operation and the neighboring device which is the target to be scanned.

For example, when the electronic device and the neighboring device are located within the line of sight (LOS), the method for scanning the neighboring devices using the directional antenna may be applied, and, when the electronic device and the neighboring device are not located within the LOS, the method for scanning the neighboring devices such the directional antenna cannot be applied.

Therefore, when the electronic device and the neighboring device are not located within the LOS, the electronic device may automatically switch over to the method for scanning the neighboring device using the omni-directional antenna, or may display a user interface screen or etc. in order for the user to recognize a current situation and convert into the method for scanning the neighboring devices using the omni-directional antenna.

The method for scanning the neighboring devices using the omni-directional antenna and the method for scanning the neighboring devices using the directional antenna may be converted into each other automatically or semi-automatically according to various factors such as a network environment, a place, communication quality, etc.

The various example embodiments of the present disclosure may be usefully applied to perform various smart functions.

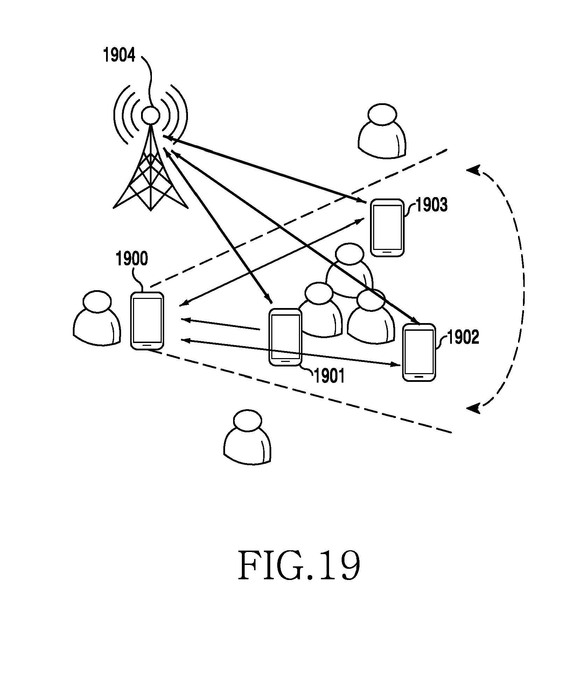

FIG. 19 illustrates a view showing an example of a smart picture tagging operation according to various example embodiments of the present disclosure. For example, when a user carrying an electronic device 1900 according to various example embodiments of the present disclosure uploads pictures that the user has taken onto a camera, a wireless device, or a social media website such as an SNS, the user may use a picture tagging service to easily classify the pictures.

There are various tagging services. For example, a normal picture tagging method for tagging a person's face (or an object) may perform the following operations: segmenting a person's face (or an object) in a picture to be tagged; extracting characteristic information using image recognition technology; and finding a similar person (or object) by comparing the characteristic information and characteristic information of pictures in a database in a user device or in an on/off line database.

The normal picture tagging method may automatically perform picture tagging or may semi-automatically perform picture tagging by receiving identification of automatically extracted tagging information from the user. However, the above-described normal picture tagging method has many disadvantages. Specifically, when a person's (or object) face appearing in a picture to be tagged is not clearly photographed, when there are many persons' faces (or objects) in the picture to be tagged, when there are many pictures (or objects) in the database of the user, or when face (or object) matching is performed online, the accuracy of tagging is very low, or excessive computing power (operation/battery consumption) is consumed, and network traffic higher than a predetermined bandwidth is utilized to exchange information.

In particular, it is important for a wireless terminal with a camera function (for example, a smart phone) to reduce an amount of processor calculations utilized, and reduce thereby simultaneously reduce battery consumption. Therefore, when tagging operations increase, a burden on resources of a terminal also increases. In particular, when scanning, extracting, and tagging for video data are performed in addition to tagging through face recognition on a person or an object in a picture, the amount of calculation and the network traffic greatly increase.

According to various example embodiments of the present disclosure, when taking a picture and tagging the picture, a user terminal may directly acquire tagging target information by communicating with users' devices, rather than by tagging through image recognition of a person's face (or object), which utilizes resources. Tangentially, a photographer may not always be a physical person, and may be various types of automated cameras.

Specifically, a photographer may be various independent photographing devices such as a CCTV, a drone camera, etc. The photographer may acquire a location information of a user (including altitude information), a photographing angle, a photographing time, a wide angle and characteristic information of a lens, and information on wireless terminals of others located nearby using sensors of the user terminal which takes a picture.

In addition, when the terminal users located near the photographer are determined as priority tagging target candidates through signal measurement around the wireless terminal, a person (or an object) disposed at a location (for example, a location and an angle on a map) which to be photographed by the camera may simultaneously be secondarily determined as a first priority tagging target.

When the neighboring device scanning method according to various example embodiments of the present disclosure is applied to the limited tagging target candidates, the number of tagging targets may be reduced to the set of neighboring devices (for example, 1901-1903 of FIG. 19) located in a desired direction or in desired direction and distance, and increasing the efficacy of picture tagging.

In this example case, two methods for recognizing neighboring users (or neighboring devices) are disclosed. As mentioned in the various example embodiments of the present disclosure, a terminal may recognize neighboring terminals through communication between the terminals, and a terminal or a server which serves as a host in the middle of communication may recognize a user by inference, based on information of other terminals, such as location and altitude of various terminals, time, etc.

The first example of the terminal or server which serves as the host is a base station (BS)/eNB of a communication service provider, the second example is a device provided with a CCTV function like a drone, the third example is an SNS or cloud service server like Facebook, and the fourth example is a personal portable terminal. The first example may infer a tagging target using user location on a cell of a corresponding base station (for example, 1904 of FIG. 19) when the user photographs, and the third example may infer a tagging target based on location information of users who allows use of their location logs in advance at the time of registering pictures at a cloud service server after photographing.

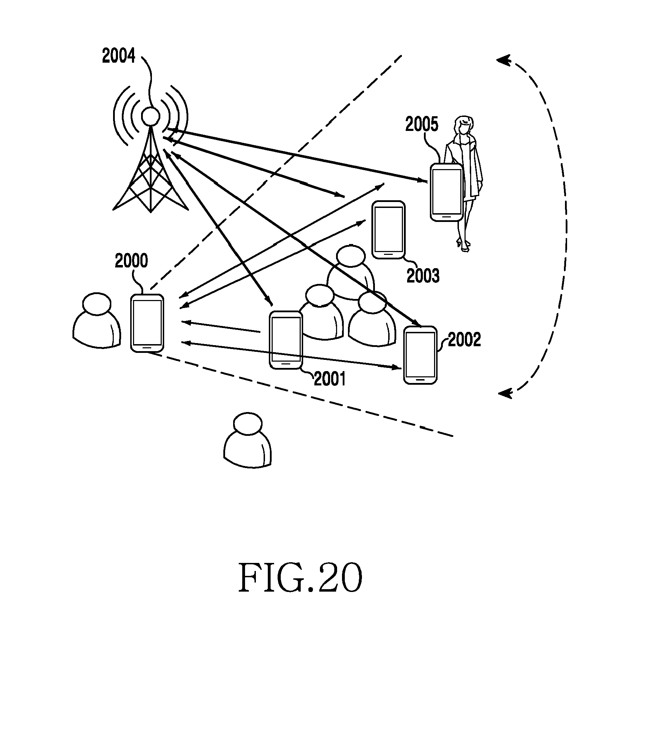

FIG. 20 illustrates a view showing an operation of refusing to be photographed according to various example embodiments of the present disclosure. For example, in recent years, various video devices such as a user video device or a CCTV are taking many photos and making videos. Accordingly, there is a concern that a particular user or an object that the user does not wish to reveal to the public may appear in others' photos or videos intentionally or unintentionally.

For example, referring to FIG. 20, a person carrying an electronic device 2005 (such as a smart phone) may be exposed to the camera of an electronic device 2000 of another user, and may have difficulty preventing a photo including the person from being uploaded onto a social media or a cloud server as it is and thus appearing to the public.

According to various example embodiments of the present disclosure, a user who does not wish to reveal private information may be equipped with a function indicating "refusing to be photographed." A photographer may not necessarily be a person and may be various independent photographing devices such as a CCTV, a drone camera, etc. For example, most people carry an electronic device such as a smart phone, etc. (for example, 2001-2003 of FIG. 20) or a wearable device, and thus the following method may be performed.

For example, the photographer may acquire location information of a user (including altitude information), a photographing angle, a photographing time, a wide angle and characteristic information of a lens, and information on wireless terminals of others located nearby using sensors of the user terminal which takes a picture.

In addition, the terminal users located nearby the photographer may be primarily determined as priority target candidates to be photographed through signal measurement around the wireless terminal, and a person (or an object) located at a location (for example, a location and an angle on a map) which may be a target to be photographed by the camera at the same time may be secondarily determined as a first priority target to be photographed.

In this case, there are two methods for recognizing neighboring users. As in the various example embodiments of the present disclosure, a terminal may recognize neighboring terminals through communication between the terminals, and a terminal or a server which serves as a host in the middle of communication may recognize a user by inferring based on information of other terminals such as location and altitude of various terminals, time, etc.

The first example of the terminal or server which serves as the host is a base station (BS)/eNB of a communication service provider, the second example is a device provided with a CCTV function like a drone, the third example is an SNS or cloud service server like Facebook, and the fourth example is a personal portable terminal. The first example may infer a target to be photographed using user location on a cell of a corresponding base station (for example, 2004 of FIG. 20) when the user photographs, and the third example may infer a target to be photographed based on location information of users who allows use of their location logs in advance at the time of registering pictures at a cloud service server after photographing.

When the target which is selected to be photographed expresses an intention, through an electronic configuration, of "refusing to be photographed" in advance or afterward through an on-line or off line setting or configuration, the appearance of the corresponding user or object may be deleted, or changed to an icon of a different appearance (for example, a smiley face), or a process requesting a license or allowance for the portraiture or display rights of a photographed person in the photographed picture or video may be requested.

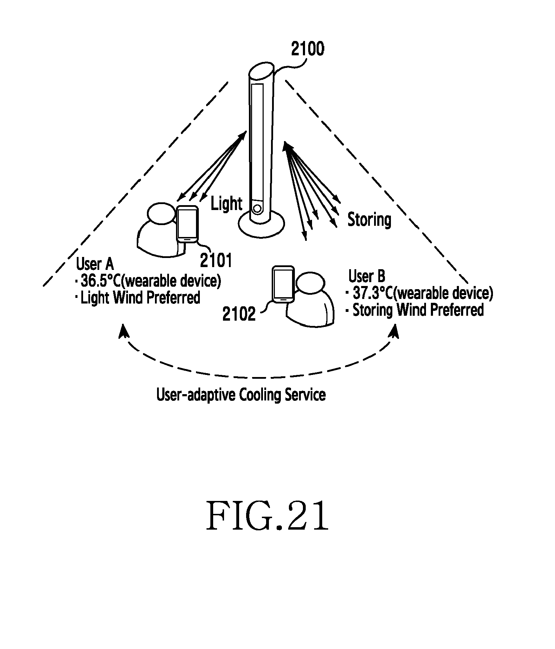

FIG. 21 illustrates a view showing a position recognition-based service according to various example embodiments of the present disclosure. For example, the directional scanning method according to the present disclosure may be applied to various services such as enjoying arts in a museum, a game application such as aerobics, finding a parked car, etc.

According to various example embodiments of the present disclosure, a WiFi function may be installed in, for example, a number of object exhibited in a museum, and then the positions of the objects may be identified through the directional scanning method of the present disclosure, and various guide services can be offered.

For example, a game console may provide controls for a videogame through communication with a controller. The method according to various example embodiments of the present disclosure may be applied to a wearable device such as a smart watch (for example, "Gear Fit" of Samsung), and the gamer identifies a position using the wearable device, and enjoys the game instead of using the traditional controller designed for use with the console.

In addition, when a user forgets a parking position of a car, the position of the parked car may be discovered by performing the directional scanning method of the present disclosure, with respect to cars provided with a WiFi function.

According to various example embodiments of the present disclosure, when mm-wave frequency-based beamforming technology is applied to Kinect which uses a 2D camera and depth information, the method for recognizing a user position may be applied to various games.

The various example embodiments of the present disclosure may be applied to a "user adaptive air conditioner" or a "user adaptive fan." Referring to FIG. 21, when the method for directionally scanning the neighboring devices according to various example embodiments of the present disclosure is applied to a fan 2100, the fan 2100 may grasp the position of a first user (for example, User A) carrying a first electronic device 2101 such as a smart phone, and the position of a second user (for example, User B) carrying a second electronic device 2102.

In addition, the fan 2100 may switch the type of wind to a pre-set wind which is desired by the first user and a pre-set wind which is desired by the second user every time the wind of the fan 2100 is toward the position of the first user and the position of the second user.

Furthermore, the fan 2100 may use biometric information (for example, temperature, etc.) which is acquired by a device such as a smart watch from among wearable devices worn by the first user and the second user, or sensors around the users, and may adjust the type or strength of the wind desired by the user, or may provide an optimally customized wind for each user considering the biometric information such as user's temperature, heart bit, etc.

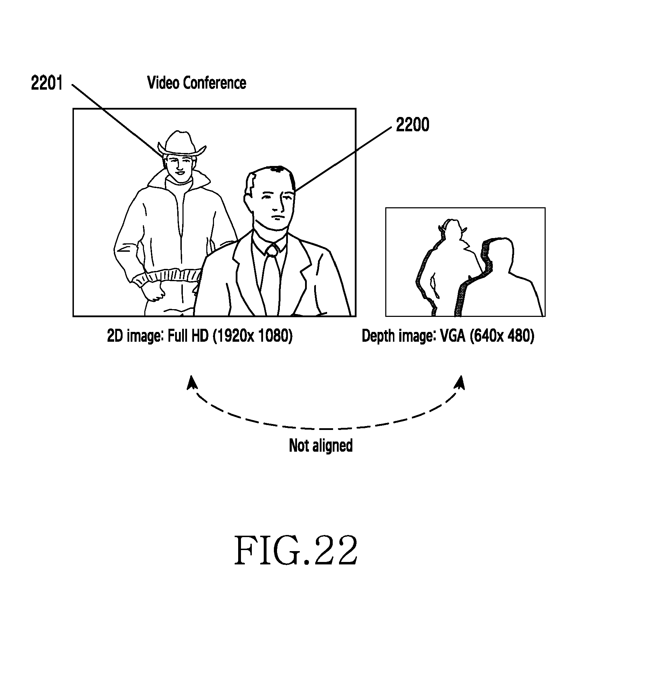

FIG. 22 illustrates a view showing an example of a video conference operation according to various example embodiments of the present disclosure. According to various example embodiments of the present disclosure, when a user position is determined through a directional sector level sweeping method, the user position may be set as a Region of Interest (ROI), and an enhanced service may be differently provided to the ROI.

For example, an mm-wave-based communication function such as 802.11ad (or standards such as 802.11ax, etc.) may be added to a device like Kinect of Microsoft. In current 2D+depth sensor devices such as Kinect, etc., the 2D camera may support an image of a clear resolution (for example, HD resolution of 1920X1080), but the depth sensor has a disadvantage of supporting images of a lower resolution than that of the image of the 2D camera because the depth sensor transmits and receives beams for a limited time and has limited accuracy.

According to various example embodiments of the present disclosure, when the video conference operation is performed as shown in FIG. 22, a position of a speaker 2200 carrying an electronic device (not shown) such as a smart phone may be grasped, and then the image quality of the speaker 2200 may be enhanced in comparison with the image quality of the other person 2201. In addition, when a Packet Loss Rate (PLR) is low, the image may be transmitted through a more stable channel, and more Forward Error Correction (FEC) may be added during the transmission.

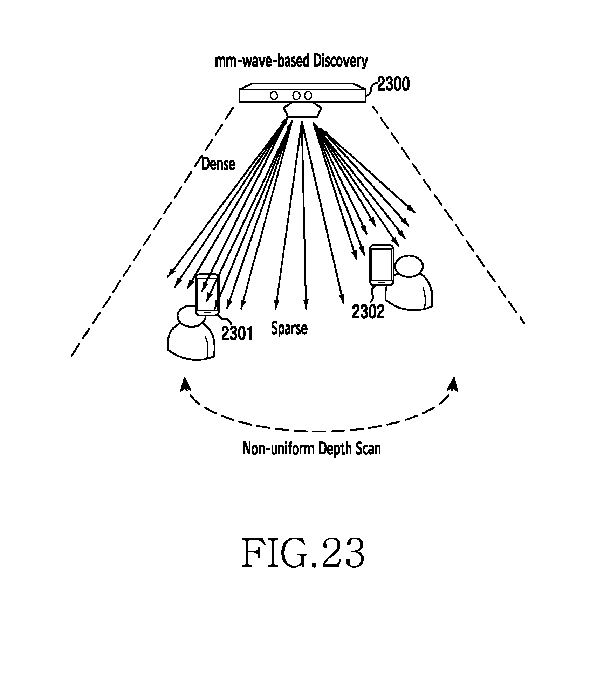

FIG. 23 illustrates a view showing a non-uniform depth scan operation based on an ROI according to various example embodiments of the present disclosure. Referring to FIG. 23, various kinds of electronic devices 2300 for scanning users' positions through mm-wave-based scanning may grasp the position of a first user through directional wireless communication with an electronic device 2301 carried by the first user, and may grasp the position of a second user through directional wireless communication with an electronic device 2302 carried by the second user.

When the positions of the first user and the second user are held or carried as described above, the electronic device 2300 may set the positions of the users as an ROI, and perform depth sensor scan with respect to the ROI more densely and perform relatively sparse scan with respect to the other regions.

By selectively performing depth sensor scan as described above, a frame rate of a depth map provided by Kinect can increase or the accuracy of depth of an important object like a user can be enhanced.

According to various example embodiments of the present disclosure, the directional neighboring device scanning method using the mm-wave frequency may be applied to inter-vehicle communication to communicate between a first car and a second car which is in the same lane at the same time.

This may be used in the vehicular technology field as a method for a car running ahead to inform a car running behind of a road condition. In addition to the inter-vehicle communication, this method may be applied to a method for transferring information to a second car by communicating with a device which is located nearby a first car and provided with a communication function (for example, a smart street lamp).

The method according to various example embodiments of the present disclosure described above may directionally scan the neighboring devices, acquire useful information more efficiently, and then provide an appropriate service to various users using the neighboring device according to the information.

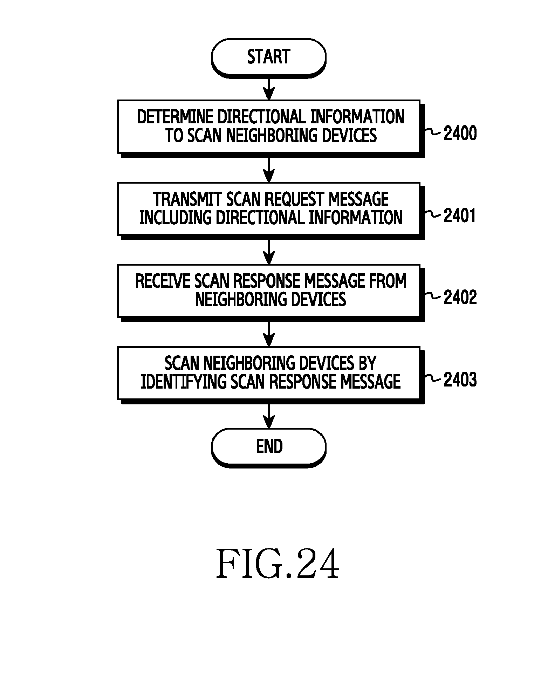

FIG. 24 illustrates a flowchart showing a method for scanning neighboring devices of an electronic device according to various example embodiments of the present disclosure. Referring to FIG. 24, the electronic device according to various example embodiments of the present disclosure may determine directional information for scanning neighboring devices in operation 2400, and transmit a scan request message including the determined directional information to neighboring devices through wireless communication in operation 2401.

The electronic device may receive a scan response message responding to the scan request message from the neighboring devices through the wireless communication in operation 2402, and directionally scan the neighboring devices by identifying the scan response message in operation 2403.

Each of the above-described elements of the electronic device according to various embodiments of the present disclosure may include one or more components, and the name of a corresponding element may vary according to the type of electronic device. The electronic device according to various embodiments of the present disclosure may include at least one of the above described elements and may exclude some of the elements or further include other additional elements. Further, some of the elements of the electronic device according to various embodiments of the present disclosure may be coupled to form a single entity while performing the same functions as those of the corresponding elements before the coupling.

According to various embodiments of the present disclosure, at least some of the devices or methods according to various embodiment of the present disclosure as defined by the appended claims and/or disclosed herein may be implemented in the form of hardware, software, firm ware, or any combination (e.g., module or unit) of at least two of hardware, software, and firmware. The "module" may be interchangeably used with, for example, the term "unit", "logic", "logical block", "component", or "circuit". The "module" may be a minimum unit of an integrated component element or a part thereof.

The "module" may be the smallest unit that performs one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations, which may be known or is to be developed.

If implemented in software, a computer-readable storage medium (or storage medium readable by a computer) storing at least one program (or programming module) may be provided. The software may, for example, be implemented by instructions stored in a computer-readable storage medium in the form of a programming module. The at least one program may include instructions that cause the electronic device to perform the methods according to various embodiments of the present disclosure as defined by the appended claims and/or disclosed herein.

The computer-readable storage medium may, for example, be the memory 230. At least a part of the programming module may, for example, be implemented (e.g., executed) by the processor 210. At least a part of the programming module may, for example, include a module, a program, a routine, a set of instructions, or a process for performing at least one function.

The computer-readable storage medium may include magnetic media such as a hard disc, a floppy disc, and a magnetic tape; optical media such as a compact disc read only memory (CD-ROM) and a digital versatile disc (DVD); magneto-optical media such as a floptical disk; a hardware device specifically configured to store and execute program instructions (e.g., programming module), such as a read only memory (ROM), a random access memory (RAM), and a flash memory; an electrically erasable programmable read only memory (EEPROM); a magnetic disc storage device; any other type of optical storage device; and a magnetic cassette.

Alternatively, any combination of some or all of the may form a memory in which the program is stored. Further, a plurality of such memories may be included in the electronic device. In addition, the program instructions may include high class language codes, which can be executed in a computer by using an interpreter, as well as machine codes made by a compiler.

According to various embodiments, the electronic device 101 may include a computer-readable storage medium having a program stored therein to perform an operation for identifying a call inability state of the counterpart electronic device having received the call and an operation for transmitting the call wish message to the counterpart electronic device.

In addition, the program may be stored in an attachable storage device capable of accessing the electronic device through a communication network such as the Internet, an intranet, a local area network (LAN), a wide LAN (WLAN), a storage area network (SAN), or any combination thereof. Such a storage device may access the electronic device via an external port. Further, a separate storage device on the communication network may access a portable electronic device. Any of the hardware devices as described above may be configured to work as one or more software modules in order to perform the operations according to various embodiments of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

Meanwhile, the example embodiments disclosed in the specification and drawings are merely presented to easily describe technical contents of the present disclosure and help the understanding of the present disclosure and are not intended to limit the present disclosure. Therefore, all changes or modifications derived from the technical idea of the present disclosure as well as the embodiments described herein should be interpreted to belong to the present disclosure.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for". In addition, an artisan understands and appreciates that a "processor" or "microprocessor" may be hardware in the claimed disclosure. Under the broadest reasonable interpretation, the appended claims are statutory subject matter in compliance with 35 U.S.C. §101.

The definition of the terms "unit" or "module" as referred to herein are to be understood as constituting hardware circuitry such as a CCD, CMOS, SoC, AISC, FPGA, DSP a processor or microprocessor (a controller/control unit) configured for a certain desired functionality, or a communication module containing hardware such as transmitter, receiver or transceiver, or a non-transitory medium comprising machine executable code that is loaded into and executed by hardware for operation, in accordance with statutory subject matter under 35 U.S.C. §101 and the broadest reasonable interpretation does not constitute software per se. For example, the processors in the present disclosure include hardware circuitry and none of Applicant's appended claim elements are pure software or software per se.

## Claims

1. An operation method of an electronic device (101), comprising:
determining, by at least one processor, directional information (2400) associated with a certain orientation of transmission or reception;
transmitting a scan request message comprising the directional information through wireless communication (2401); and
receiving a scan response message responding to the scan request message through the wireless communication (2402).

2. The operation method of claim 1, wherein the directional information comprises at least one of location information, direction information, angle information, transmission power, or distance information.

3. The operation method of claim 1, wherein at least one of the scan request message and the scan response message is transmitted and received through at least one of an omni-directional antenna (310) or a directional antenna (910).

4. The operation method of claim 1, wherein the scan request message is included in a Bluetooth low-energy (BLE) frame (500), and
wherein the BLE frame is transmitted in all directions through an omni-directional antenna (310),
wherein a protocol data unit (PDU) in the BLE frame is divided into a header and a payload, and
wherein a partial area of the payload comprises at least one of location information and direction information corresponding to the directional information.

5. The operation method of claim 1, wherein the scan request message (2401) is included in a WiFi frame, and
wherein the WiFi frame (1600) is transmitted in a plurality of directions sequentially iterating through a plurality of sectors via a directional antenna.

6. The operation method of claim 5, wherein the directional antenna (910) transmits the WiFi frame in a beamforming method which is based on an mm-wave frequency.

7. The operation method of claim 5, wherein the scan request message (2401) comprises at least one of an initiator ID identifying an electronic device which is a subject of a scanning operation, a scan type, a directional information indicating a scan direction, a beam power level, a beam sector identifier, a response schedule, or GPS information.

8. The operation method of claim 1, further comprising, after directionally scanning a neighboring device (1102-1105) based on the scan response message, executing at least one of:
smart tagging of an image based on the scanned the neighboring device,
terminating a photographic operation based on the neighbor device indicating photographic refusal,
a location recognition-based service,
a video conference, and
a non-uniform depth scan based on a region of interest.

9. An electronic device (101) comprising:
an antenna (170);
a communication module (160); and
at least one processor (120), configured to:
determine directional information (2400) associated with a certain orientation of transmission or reception,
control the antenna and the communication module to transmit a scan request message comprising the directional information through wireless communication (2401), and
control the antenna and the communication module to receive a scan response message responding to the scan request message through the wireless communication (2402).

10. The electronic device of claim 9, wherein the antenna is at least one of an omni-directional antenna (310) and a directional antenna (910), and
wherein at least one of the scan request message and the scan response message is transmitted and received through at least one of the omni-directional antenna and the directional antenna.

11. The electronic device of claim 9, wherein the scan request message is included in a Bluetooth low energy (BLE) frame (500), and
wherein the BLE frame is transmitted in all directions through an omni-directional antenna (310),
wherein a protocol data unit (PDU) in the BLE frame is divided into a header and a payload, and
wherein a partial area of the payload comprises at least one of location information and direction information corresponding to the directional information.

12. The electronic device of claim 9, wherein the scan request message is included in a WiFi frame, and
wherein the WiFi frame (1600) is transmitted through a plurality of directions sequentially iterating through a plurality of sectors via a directional antenna.

13. The electronic device of claim 12, wherein the directional antenna (910) transmits the WiFi frame (1600) in a beamforming method which is based on an mm-wave frequency.

14. The electronic device of claim 12, wherein the scan request message (2401) comprises at least one of: an initiator ID identifying an electronic device which is a subject of a scanning operation , a scan type, information indicating a scan direction, a beam power level, a beam sector identifier, a response schedule, or GPS information.

15. The electronic device of claim 12, wherein the processor is configured to, after directionally scanning a neighboring device (1102-1105) based on the scan response message, executing at least one of:
smart tagging of an image based on the scanned the neighboring device,
terminating a photographic operation based on the neighbor device indicating photographic refusal,
a location recognition-based service,
a video conference, and
a non-uniform depth scan based on a region of interest.
